(19) Europäisches Patentamt
European Patent Office
Office européen des brevets

(11) **EP 2 461 539 B1**

(12) **EUROPEAN PATENT SPECIFICATION**

(45) Date of publication and mention
of the grant of the patent:
**22.01.2020 Bulletin 2020/04**

(51) Int Cl.:
*H04L 29/06* (2006.01)        *H04N 5/00* (2011.01)
*H04N 7/16* (2011.01)         *H04N 7/167* (2011.01)
*H04N 21/266* (2011.01)       *H04N 21/6334* (2011.01)
*H04N 21/835* (2011.01)

(21) Application number: **11250650.6**

(22) Date of filing: **11.07.2011**

(54) **Control word protection**

Steuerwortschutz

Protection de mot de contrôle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2010 EP 10193312**

(43) Date of publication of application:
**06.06.2012 Bulletin 2012/23**

(73) Proprietor: **Irdeto B.V.
2132 LS Hoofddorp (NL)**

(72) Inventor: **Roelse, Petrus Lambertus Adrianus
2132 LS Hoofddorp (NL)**

(74) Representative: **Boult Wade Tennant LLP
Salisbury Square House
8 Salisbury Square
London EC4Y 8AP (GB)**

(56) References cited:
**EP-A2- 0 801 478        WO-A1-03/028287
WO-A2-2006/045014      US-A1- 2003 188 164**

• SCHNEIER BRUCE: "Applied Cryptography",
HANDBOOK OF APPLIED CRYPTOGRAPHY, XX,
XX, no. ED.2, 18 October 1995 (1995-10-18), pages
30-46,50, XP002973231,

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### Field of the invention

The present invention relates to methods and apparatus for securely obtaining a control word in a chip set of a receiver. The present invention also relates to methods and systems for providing a control word to a chip set of a receiver. The present invention also relates to computer programs for carrying out such methods, as well as computer readable media storing such computer programs.

### Background of the invention

Conditional access/digital rights management (CA/DRM) systems for digital video broadcast (DVB) transmissions are well known and widely used in conjunction with pay television (TV) services. Such systems provide secure transmission of a broadcast stream comprising one or more services to a digital receiver contained for example in a set-top box or a mobile terminal supporting broadcast services. To protect the broadcast services from unauthorized viewing, the data packets are scrambled (encrypted) at the transmitter side with an encryption key commonly referred to as a control word. A CA/DRM system implements the selective distribution of the control words to authorized receivers only. Further security is provided by periodically changing the control words so they are only valid for a certain period. Typically control words are transmitted in encrypted form to the receiver using so-called entitlement control messages (ECMs).

In the receiver an ECM is filtered out of a transport stream and sent to a secure computing environment, referred to as a CA/DRM client (e.g., a CA/DRM client can be a smart card with embedded software or it can be an obfuscated software module executed inside the receiver). The CA/DRM client subsequently decrypts the ECM using a higher-level key, which is common to all CA/DRM clients that are authorized to access the TV channels associated with the control words included in the ECM. The control word is returned to the receiver, which loads the control word into the descrambler for descrambling data.

Control word piracy is a significant problem in digital video broadcasting (DVB) systems. A common attack uses the fact that a control word is a shared key that unlocks content on all receivers. An adversary can break part of the key delivery infrastructure to obtain control words and re-distribute the control words to unauthorized receivers. For instance, sometimes adversaries are able to intercept a control word that is transmitted from the CA/DRM client to the receiver and re-distribute it over local networks or over the internet. The re-distributed control word is then used to descramble the scrambled services without a legitimate authorized CA/DRM client. A security requirement is therefore that the confidentiality and the authenticity of a control word should be protected.

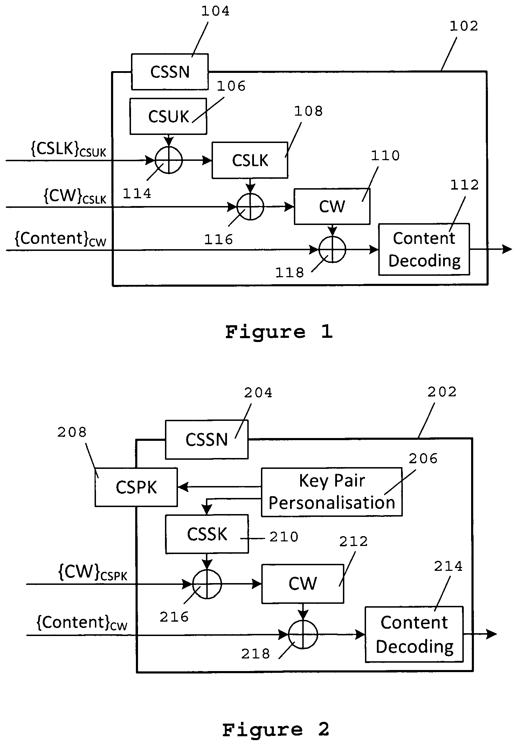

In some cases, a chip set supports a key hierarchy to secure the control word delivery based on secret keys installed during the manufacturing process. Figure 1 of the accompanying drawings shows a prior art example of chip set 102 of a receiver to load keys to descramble content. Decryption modules 114, 116 and 118 use encrypted input data and an input key to obtain decrypted output data. The chip manufacturer personalizes the chip set with a pseudo-random secret value for the symmetric chip set unique key CSUK and assigns a non-secret chip set serial number CSSN to the chip set for future identification. Elements 104 and 106 are read-only memory locations, for storing CSSN and CSUK, respectively. Elements 108 and 110 are read-and-write memory locations for temporary storing decrypted output data. As shown, content decoder 112 decodes the descrambled content. Dataflows between elements are indicated by arrows. Labels along the arrows identify the dataflows.

As shown in Figure 1, a content stream scrambled with control word CW, denoted by $\{Content\}_{CW}$, is received in the chip set 102. To provide the control word needed to descramble the content, chip set 102 supports secure loading of the associated CW using input $\{CW\}_{CSLK}$, which denotes the CW encrypted with a symmetric chip set load key CSLK. Said CSLK is received at chip set 102 encrypted with the symmetric chip set unique key CSUK, which is denoted by input $\{CSLK\}_{CSUK}$. To decrypt $\{CSLK\}_{CSUK}$, CSUK is needed. The CSUK and the chip set serial number CSSN associated with the particular chip set are typically pre-installed in memory locations on the chip set (element 104 and element 106, respectively) and cannot be altered. In operation, CSUK is retrieved from secured storage (i.e., element 106) in chip set 102 and is used to decrypt the CSLK from $\{CSLK\}_{CSUK}$ using decryption module 114. Once decrypted, CSLK is stored in memory (i.e., element 108), and can be used to decrypt $\{CW\}_{CSLK}$ using decryption module 116. Lastly, the clear control word stored in memory (i.e., element 110) is used by decryption module 118 to descramble incoming scrambled content $\{Content\}_{CW}$, such that the content may be decoded by the chip set using content decoder 112. Content decoder 112 can be external to the chip set 102 and is typically a part of the receiver.

Typically, for vertical market receivers, a chip manufacturer supplies a list of (CSSN, CSUK) pairs to a CA/DRM supplier, enabling the loading of a value for the chip set load key CSLK into a chip set, using the method depicted in Figure 1. Known conditional access systems use a key loading mechanism, such as shown in Figure 1, by sending an entitlement management message (EMM) and an ECM from a head-end system to the CA/DRM client. For the example in Figure 1, the EMM includes the CSLK (intended for the CA/DRM client, and protected using the confidential and authentic channel offered by the CA/DRM system) and its encrypted version $\{CSLK\}_{CSUK}$ (intended for the chip set 102). The ECM includes an encrypted CW. The CA/DRM client provides $\{CSLK\}_{CSUK}$ to the chip set and may use the CSLK as a key for loading a sequence of control words. That is, the CA/DRM client may use CSLK to re-encrypt a CW included in an ECM, resulting in a message $\{CW\}_{CSLK}$ that is sent to the chip set 102. Typically, CSLK is unique to a particular combination of CA/DRM client and chip set, and consequently, only that chip set can decrypt $\{CW\}_{CSLK}$ received from the CA/DRM client (so sharing a CW loading message $\{CW\}_{CSLK}$ is not possible).

For horizontal market receivers, a CA/DRM system operator shall be able to swap a CA/DRM system. In the solution described above for vertical market receivers, the secret master key associated with the receiver (that is, the key CSUK) is known to a CA/DRM supplier. From a security perspective, this property is undesirable for horizontal market receivers. A reason for this is that the current CA/DRM supplier may publish the secret master key CSUK after the CA/DRM system has been swapped, compromising the security of the receiver. A security requirement for horizontal receivers is therefore that the scheme shall not require that any of the receiver's secrets known to a CA/DRM supplier need to be known to any other CA/DRM supplier. This requirement is not satisfied in the scheme described above.

While the example in Figure 1 depicts a method that uses symmetric cryptographic algorithms, it is also possible to use asymmetric, or public-key, cryptography as shown in Figure 2 of the accompanying drawings.

Figure 2 shows a typical chip set implementing the loading of a control word using an asymmetric cryptographic algorithm to protect the confidentiality of the control word. Chip set 202, associated with chip set serial number CSSN includes element 204 (read-only memory storage location), element 208 and element 210 for storing a key pair (read-and-write memory storage locations), and element 212 for temporarily storing a clear control word (read-and-write memory location). To protect the authenticity of the key pair, preferably element 208 and element 210 are write-once memory locations.

Instead of loading a pair (CSSN, CSUK) during manufacturing and sending the pairs to the CA/DRM suppliers and their operators (as performed in the example shown in Figure 1), the chip manufacturer of chip set 202 shown in Figure 2 personalizes chip set 202 by activating key pair personalization module 206 that generates a random key pair consisting of a chip set public key CSPK and a chip set secret key CSSK. The CSPK and CSSK are stored in elements 208 and 210, respectively. Alternatively, the key pair personalization module 206 may be implemented outside the chip set 202 (e.g., in a chip set personalization system available to the chip set manufacturer), and the manufacturer may load CSSK into the chip set 202 during its personalization. After this, the manufacturer can delete CSSK from its system(s).

The manufacturer maintains pairs of numbers, each pair comprising of a chip set serial number CSSN and its associated chip set public key CSPK. The list of (CSSN, CSPK) pairs can be made available to all CA/DRM suppliers. Notice that only the authenticity of these pairs needs to be protected, as the numbers CSSN and CSPK are not secret. The CSPK is used to encrypt a CW that only the receiver with the corresponding CSSK can decrypt (using decryption module 216). That is, the encrypted control word $\{CW\}_{CSPK}$ is a unique data pattern as no other receiver will generate the same random key pair (CSPK, CSSK), so sharing a CW loading message $\{CW\}_{CSPK}$ is not possible. The decrypted CW, stored temporarily in element 212 is then used to decrypt $\{Content\}_{CW}$ by decryption module 218 to produce the descrambled content. The descrambled content is then subsequently decoded using content decoder 214.

The benefit of the public-key solution depicted as in Figure 2 is that the chip set secret key CSSK does not need to be known to any CA/DRM supplier. However, as CSPK is a public key, it is also available to an adversary. In particular, an adversary can use a CSPK to distribute a given control word CW to the receiver associated with that CSPK, e.g., after CW is compromised from another receiver. That is, this method does not protect the authenticity of a CW loading message.

A second, independent mechanism for protecting the authenticity of a CW loading message may be added to the public-key solution depicted in Figure 2. For instance, a message authentication code (MAC) can be used to protect the authenticity of a CW loading message $\{CW\}_{CSPK}$. A MAC is a symmetric cryptographic technique, based on a secret key $K_{MAC}$ shared between the CA/DRM client and the chip set. In particular, the CA/DRM client uses $K_{MAC}$ as a key to generate a MAC value of a CW loading message $\{CW\}_{CSPK}$. The computed MAC value can be appended to the message. After receiving the message and the MAC value, the chip set uses $K_{MAC}$ to verify the MAC value. Alternatively, a method based on public-key cryptography (i.e., an asymmetric digital signature) can be used for protecting the authenticity of a CW loading message $\{CW\}_{CSPK}$. In such a solution, the manufacturer loads a public key associated with a digital signature scheme into the receiver during the personalization phase. This public key can be used as a root key of an authenticity mechanism. The receiver can use the authenticity mechanism to verify the authenticity of a CW loading message $\{CW\}_{CSPK}$.

However, for both authenticity schemes (symmetric and asymmetric), the master key used for signing a message is a secret key. This implies that the requirement that the scheme shall not require that any of the receiver's secrets known to a CA/DRM supplier need to be known to any other CA/DRM supplier is not satisfied if this master key is distributed to a CA/DRM supplier.

To fulfil this requirement and to protect the confidentiality and authenticity of a control word, the role of the chip manufacturer as a trusted party can be extended (or an additional trusted party can be used). For example, an additional key layer can be introduced in both schemes, and the trusted party can manage the root keys of such a scheme. However, this implies that the trusted party needs to manage (at least) one secret associated with a receiver after its personalization is completed. For liability reasons, this role of the trusted party is not desirable for chip set manufacturers. This implies that an additional trusted party would be needed.

There is a need for an improved solution for loading control words onto chip sets that solves the problems described above. That is, there is a need for a scheme with the following properties: (i) the confidentiality and the authenticity of a CW are protected (ii) CA/DRM systems can use the scheme independently without the need to share a secret key, and (iii) after the personalization of a receiver, the trusted party no longer needs to manage any secret keys associated with the receiver (chip set).

WO03/028287 discloses selectively pairing a receiver configured to receive a media program encrypted according to a media encryption key and a conditional access module.

EP0801478 discloses a system that generates a cryptographic key for use by a pair of communicating parties while simultaneously providing for its recovery using one or more key recovery agents.

WO2006/045014 discloses an asymmetric cryptographic system based digital signature to manage message tampering and assurance of message integrity in an access control system of digital broadcast services.

"Handbook of Applied Cryptography", B Schneier, pages 30-46, 50 discloses various cryptographic techniques.

## Summary of the invention

According to a first aspect of the invention, there is provided a method for securely obtaining a control word in a chip set of a receiver, said control word for descrambling scrambled content received by the receiver, the method comprising, at the chip set:

> receiving a secured version of a chip set load key associated with the chip set, wherein the secured version of the chip set load key is secured to protect the authenticity and confidentiality of the chip set load key, wherein the secured version of the chip set load key comprises an encrypted chip set load key, and a signature based on the chip set load key using a private signature key associated with a conditional access/digital rights management system;
> obtaining the chip set load key from the secured version of the chip set load key, wherein obtaining the chip set load key from the secured version of the chip set load key comprises:
>
>> a) verifying the signature using a public signature verification key corresponding to the private signature key associated with the conditional access/digital rights management system, wherein the signature verification key is one of a plurality of public signature verification keys, and
b) decrypting the encrypted chip set load key,

the method further comprising:

> receiving a secured version of a virtual control word that is the virtual control word encrypted using the chip set load key from a conditional access/digital rights management client communicably connected to the chip set;
> obtaining the virtual control word from the secured version of the virtual control word by decrypting the secured version of the virtual control word using the chip set load key;
> using a first cryptographic function to produce a given output, the given output comprising at least one control word, from an input that comprises the virtual control word and either the plurality of public signature verification keys or one or more values derived from the plurality of public signature verification keys, each signature verification key being associated with a conditional access/digital rights management system, wherein the first cryptographic function has the property that it is infeasible to determine a key pair including a private signature key and a public signature verification key and an input for the first cryptographic function comprising the determined signature verification key or one or more values derived, at least in part, from the determined signature verification key, such that the first cryptographic function produces the given output from the determined input;
> receiving scrambled content, the scrambled content being content that has been scrambled using the at least one control word; and
> descrambling the received scrambled content using the at least one control word produced by using the first cryptographic function.

In some embodiments, the method comprises receiving and storing the signature verification keys of the plurality of signature verification keys, wherein said first cryptographic function is arranged to use said stored signature verification keys as a part of the input to the first cryptographic function.

In some embodiments, the method comprises: receiving the plurality of signature verification keys; generating a derived value from the received plurality of signature verification keys; and storing the generated derived value; wherein said first cryptographic function is arranged to use said stored derived value as a part of the input to the first cryptographic function.

In some embodiments, the encrypted chip set load key is the chip set load key encrypted using a public key associated with the chip set, and decrypting the encrypted chip set load key uses a secret key associated with the chip set, the secret key corresponding to the public key associated with the chip set. The method may then comprise the chip set storing the chip set load key obtained from the secured version of the chip set load key so that the stored chip set load key can be used to decrypt secured versions of virtual control words received by the chip set. The method may then additionally comprise: receiving the plurality of signature verification keys along with the secured version of the virtual control word; and determining whether the signature based on the stored chip set load key was verified using one of the received signature verification keys and, if it is determined that the signature based on the stored chip set load key was not verified using one of the received signature verification keys, not using the stored chip set load key to decrypt the secured version of the virtual control word received by the chip set. In these embodiments, the receiver may be one receiver in a plurality of receivers, each receiver in the plurality of receivers having a corresponding chip set that has an associated secret key, wherein the secret keys associated with the chip sets of the receivers in the plurality of receivers are different from each other.

According to a second aspect of the invention, there is provided a method for providing a control word to a chip set of a receiver, the chip set being communicatively connected to a conditional access/digital rights management CA/DRM client, the control word to enable the receiver to descramble scrambled content transmitted to the receiver, the method comprising:

transmitting to the CA/DRM client a first secured version of a chip set load key associated with the chip set, wherein the first secured version of the chip set load key comprises the chip set load key protected using the confidential and authenticated channel offered by the CA/DRM system;
transmitting to the chip set a second secured version of the chip set load key associated with the chip set, wherein the second secured version of the chip set load key is secured to protect the authenticity and confidentiality of the chip set load key, wherein the second secured version of the chip set load key comprises the encrypted chip set load key and a signature based on the chip set load key using a private signature key associated with the CA/DRM system and corresponding to one of a plurality of public signature verification keys;
generating a virtual control word at a head-end system of the CA/DRM system;
generating a control word at the head-end system, the control word being obtained as the output of a first cryptographic function from an input that comprises the virtual control word and either the plurality of public signature verification keys or one or more values derived from the plurality of public signature verification keys, each signature verification key being associated with a CA/DRM system, wherein the first cryptographic function has the property that it is infeasible to determine a key pair including a private signature key and a public signature verification key and an input for the first cryptographic function comprising the determined signature verification key or one or more values derived, at least in part from the determined signature verification key, such that the first cryptographic function produces the given output for the determined input;
transmitting the virtual control word from the head-end system to the CA/DRM client via the receiver as part of the conditional access data of the CA/DRM system;
generating at the CA/DRM client a secured version of the virtual control word, wherein the secured version of the virtual control word is the virtual control word encrypted by the CA/DRM client using the chip set load key;
transmitting by the CA/DRM client the secured version of the virtual control word to the chip set;
scrambling content at the head-end system using the control word to produce scrambled content; and
transmitting the scrambled content to the chip set.

In some embodiments of the second aspect, the encrypted chip set load key is the chipset load key encrypted using a public key associated with the chip set.
In some embodiments of the second aspect, the method comprises transmitting the control word from the head-end system to a second conditional access/digital rights management client via a second receiver, wherein the second conditional access/digital rights management client is communicably connected to a second chip set of the second receiver.
In some embodiments of the first or second aspect, at least two of the signature verification keys in the plurality of signature verification keys are associated with the same conditional access/digital rights management system.
In some embodiments of the first or second aspect, at least two of the signature verification keys in the plurality of signature verification keys are associated with different conditional access/digital rights management systems.
In some embodiments of the first or second aspect, a derived value is produced by providing the plurality of signature verification keys to a second cryptographic function, wherein the second cryptographic function has the property that it is infeasible to generate a key pair including a signature key and a signature verification key and an input for the second cryptographic function comprising the generated signature verification key such that the second cryptographic function produces that derived value from the generated input.
In some embodiments of the first or second aspect, the one or more derived values comprise, for each signature verification key in the plurality of signature verification keys, a corresponding cryptographic hash value of that signature verification key.

According to a third aspect of the invention, there is provided a chip set, for a receiver, for securely obtaining a control word, the chip set arranged to carry out a method according to the first aspect (or any embodiment thereof).

According to a fourth aspect of the invention, there is provided a head-end system of a content delivery network, the head-end system arranged to carry out a method according to the second aspect (or any embodiment thereof).

According to a fifth aspect of the invention, there is provided a receiver comprising the chip set according to the third aspect.

According to a sixth aspect of the invention, there is provided a system comprising the head-end system according to the fourth aspect and one or more chip sets according to the third aspect.

According to a seventh aspect of the invention, there is provided a computer program which, when executed, carries out a method according to the first aspect (or any embodiment thereof) or according to the second aspect (or any embodiment thereof).

**Brief description of the drawings**

Embodiments of the invention will now be described, by way of example only, with reference to the accompanying drawings, in which:

Figure 1 schematically illustrates a prior art chip set using symmetric cryptography;
Figure 2 schematically illustrates another prior art chip set using asymmetric cryptography;
Figure 3 schematically illustrates an exemplary system according to an embodiment of the invention;
Figure 4 schematically illustrates an example method of using a chip set;
Figure 5 schematically illustrates a method for use in a head-end system of a content delivery network;
Figure 6-8 schematically illustrate methods for use in a head-end system of a content delivery network that makes use of DVB SimulCrypt;
Figure 9 schematically illustrates an example method of using a chip set;
Figures 10-12 schematically illustrate modified versions of the systems and methods illustrated, respectively, in Figures 7-9;
Figure 13 schematically illustrates a variation of the chip set of Figure 12; and
Figures 14-18 correspond to Figures 6, 7, 8, 10 and 11 respectively and include one or more legacy ECM generators and one or more legacy EMM generators.

**Detailed description of embodiments of the invention**

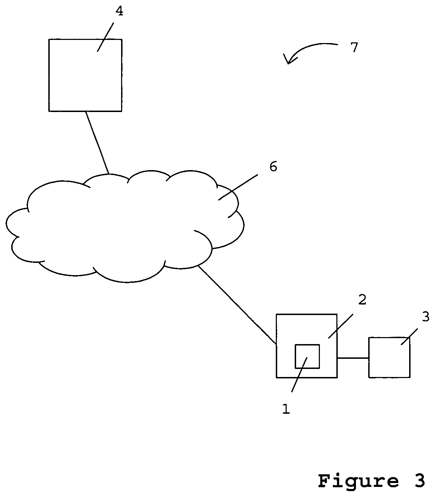

Figure 3 schematically illustrates an exemplary system 7. The system 7 comprises a head-end system 4 arranged to communicate with one or more receivers 2 via a distribution network 6.

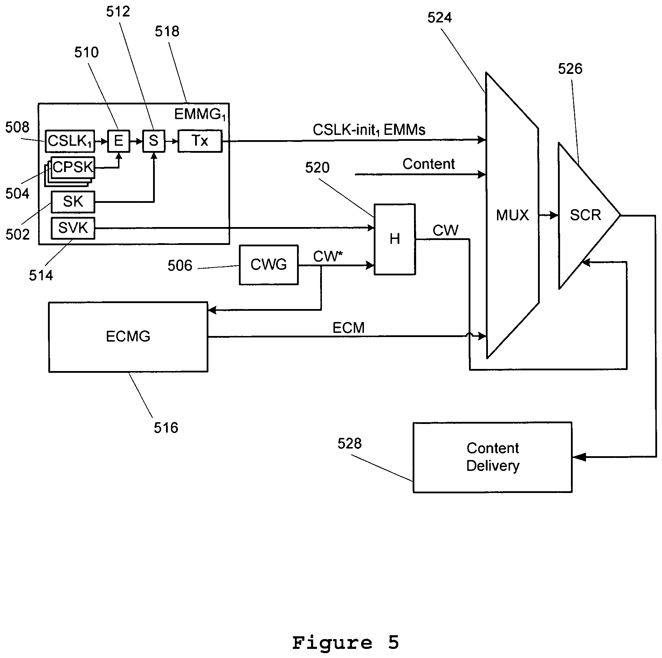

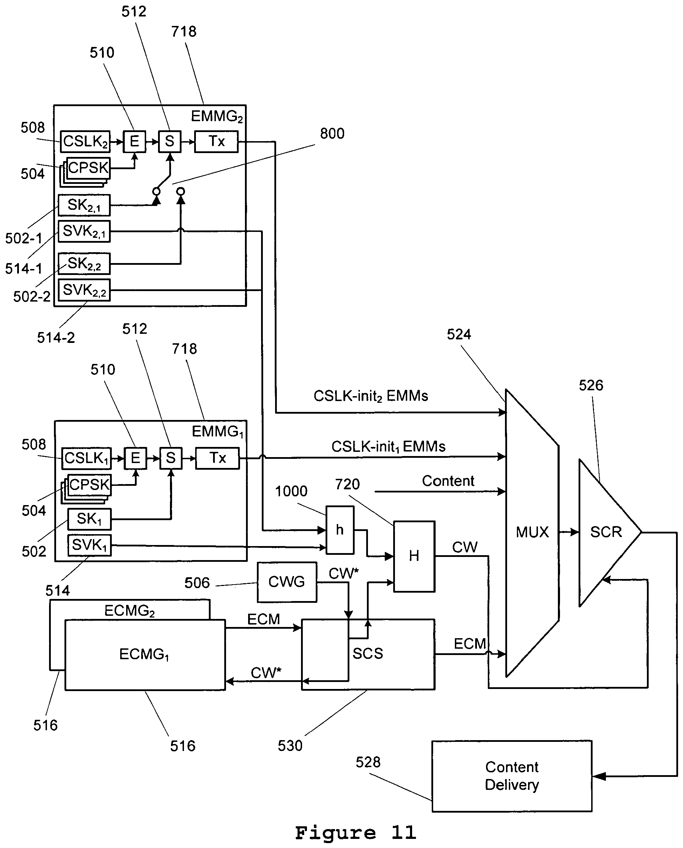

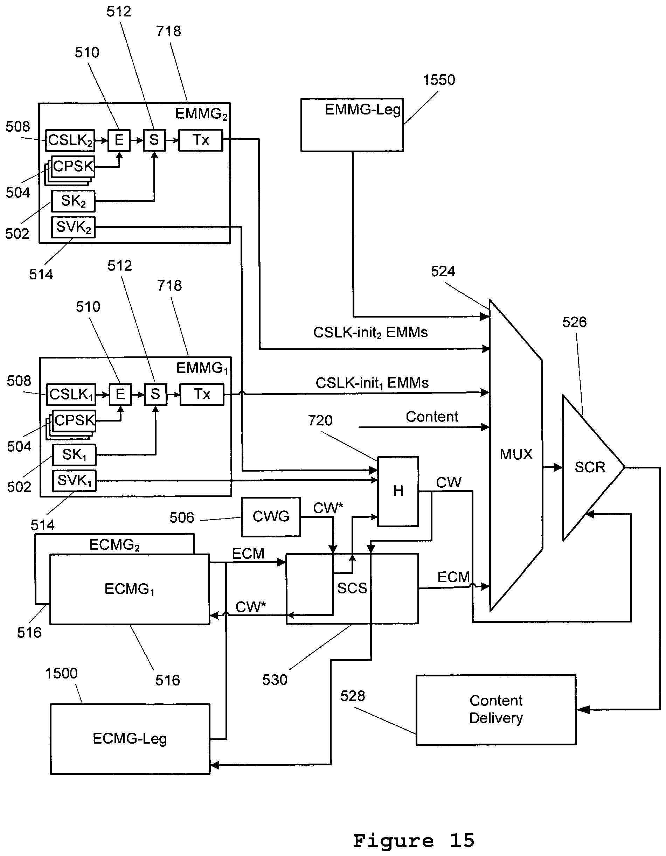

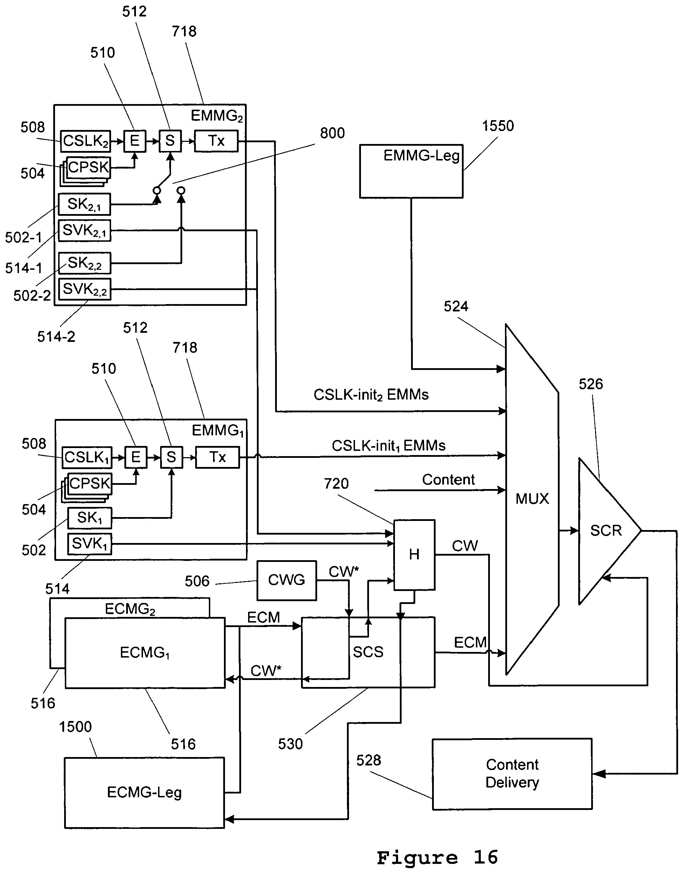

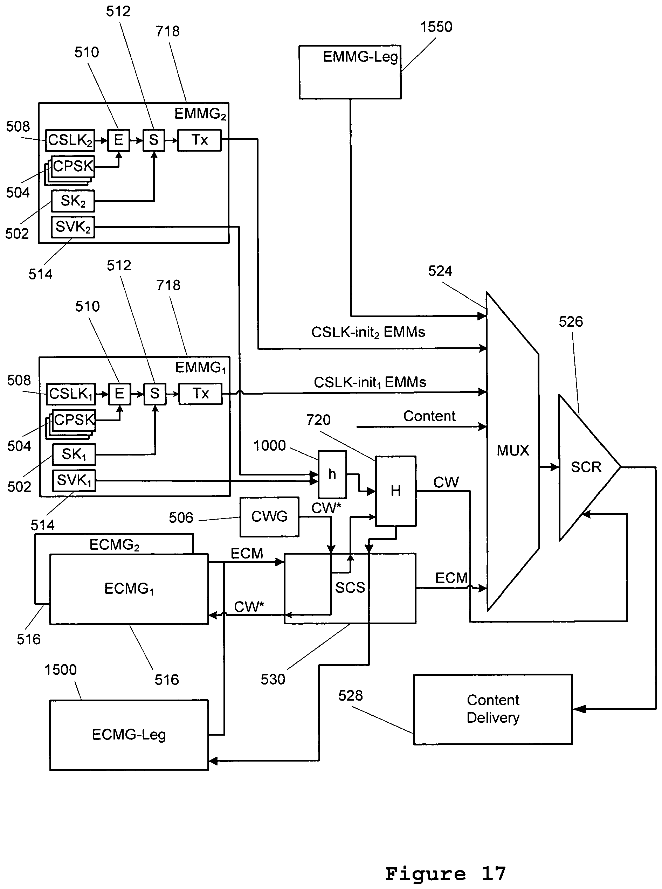

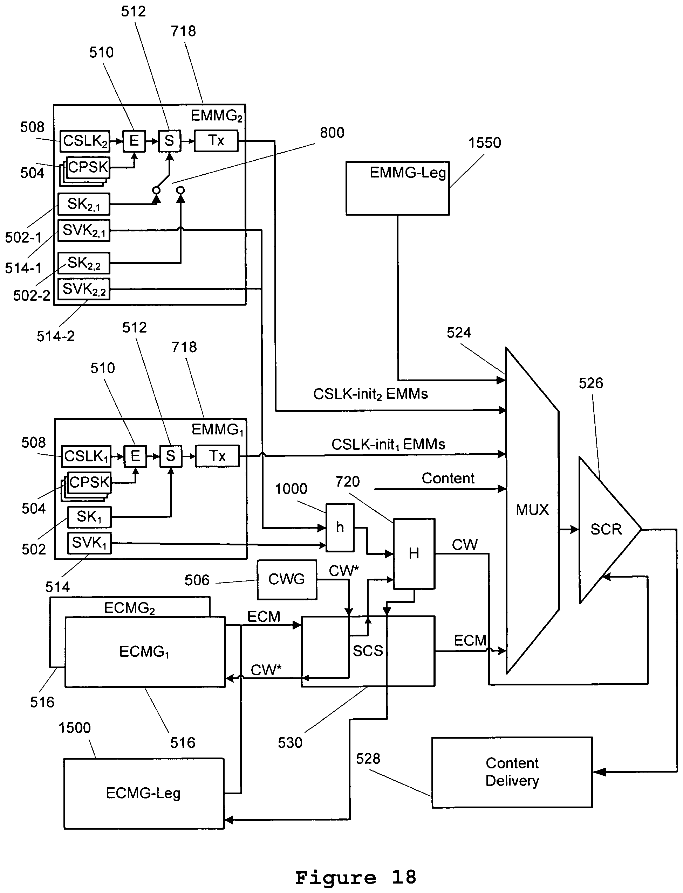

The head-end system 4 transmits (or sends or communicates) a content stream scrambled using one or more control words (i.e. {Content}$_{CW}$) to a receiver 2 via the distribution network 6. The head-end system 4 may transmit one or more ECMs and EMMs to the receiver 2 via the distribution network 6 so that the receiver 2 can access the one or more control words and thereby descramble the scrambled content stream. It will be appreciated, however, that whilst embodiments of the invention will be described with reference to ECMs and EMMs, embodiments of the invention are not limited to making use of ECMs and EMMS. The head-end system 4 may use any methods and systems described in relation to Figures 5-8, 10, 11 and 14-18 to scramble the content and provide descrambling information (e.g. ECMs and EMMs) to the receiver 2.

The distribution network 6 may be any network capable of communicating or broadcasting descrambling information (e.g. ECMs, EMMs) and scrambled content streams to the receiver 2. For example, the distribution network 6 may comprise one or more of a cable network, a satellite communication network, a terrestrial broadcast network, the internet, etc.

The (scrambled) content stream may comprise any kind of content data, such as one or more of video data, audio data, image data, text data, application/software data, program guide data, etc.

The receiver 2 may be any type of receiver (or client device) for receiving ECMs, EMMs and scrambled content streams. For example, the receiver 2 may be a set-top box, a receiver integrated into a content output device (such as a television or radio), a mobile terminal supporting broadcast services, a personal computer, etc. The receiver 2 may include, or be communicatively coupled to, a device for outputting or reproducing descrambled and decoded content to a user (such as a screen/monitor and/or one or more speakers).

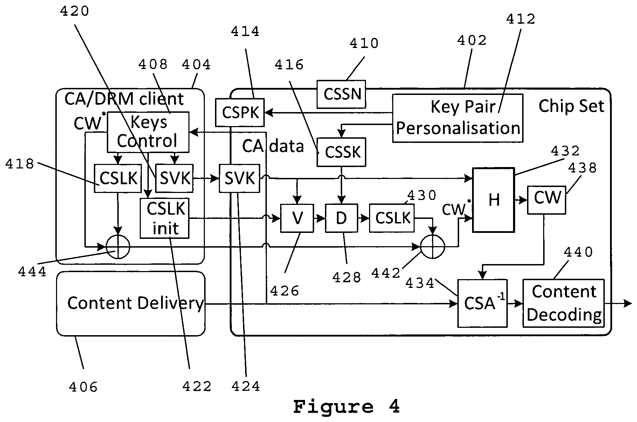

The receiver 2 includes a chip set 1 for descrambling and/or decoding scrambled and/or encoded content. The chip set 1 may be communicatively connected to a CA/DRM client 3. In general, the receiver 2 receives, filters and forwards ECMs and EMMs to the CA/DRM client 3 for further processing. The CA/DRM client 3 accesses conditional access (CA) data from the received ECMs and EMMs and can then load control words onto the chip set 1 using any methods and systems as described in relation to Figures 4, 9, 12 and 13. The CA/DRM client 3 may be a secure device removable from the receiver 2, such as a smart card (and may therefore comprise a processor and memory for carrying out the CA/DRM client functionality to be described below). Additionally or alternatively, the CA/DRM client 3 may be integral with the receiver 2 and may be implemented as a hardware component of the receiver 2 and/or in software running in a secured environment of the receiver 2 and/or in obfuscated software running in the receiver 2.

The bandwidth required for transmitting conditional access messages (EMMs and/or ECMs) using the methods and systems described below is comparable to the bandwidth required by existing mechanisms to securely load control words onto a chip set. This is important as bandwidth is a valuable resource and the solutions described below ought not degrade the overall performance of the system 7. The methods and systems described below provide a solution for protecting the confidentiality and authenticity of a control word that allows every CA/DRM system and CA/DRM system operator to establish a key loading mechanism independently, that is, without the need to share any secrets between CA/DRM systems (with the obvious exception of sharing control words in a SimulCrypt operation, as control words are, by definition, shared in a SimulCrypt operation). In addition, no trusted party in the scheme needs to manage any secret associated with a receiver (chip set) after its personalization is completed. This implies that the role of the trusted party is comparable to the role of the chip set manufacturers in currently available vertical market receiver solutions. In addition, the new methods and systems can recover from a security breach in which the root key pair of the authenticity mechanism is compromised, a security feature not offered by existing solutions.

Figure 4 schematically illustrates an example method of using a chip set. By way of illustration, the method is implemented using a chip set 402 and a CA/DRM client 404. A content delivery module 406 (e.g. of a head-end system 4) may provide conditional access data (such as ECMs and EMMs) and a scrambled content stream to the chip set 402 of a receiver 2. The chip set 402 may pass the conditional access data to the CA/DRM client 404 for further processing.

When manufactured, the chip set 402 may be personalized with a key pair. During the personalisation phase, this key pair is associated with a chip set serial number CSSN. The CSSN may be stored in a memory element 410 of the chip set 402. The key pair includes a chip set public key CSPK (which is stored in a memory element 414 of the chip set 402) and a corresponding chip set secret (private) key CSSK (which is stored in a memory element 416 of the chip set 402). The key pair is preferably generated in the chip set 402 (e.g., using key pair personalisation module 412). Alternatively, the key pair personalization module 412 may be implemented outside the chip set 402 (e.g., in a chip set personalization system available to the chip set manufacturer), and the manufacturer may load CSSK and CSPK into the chip set 402 during its personalization. After this, the manufacturer can delete CSSK from its system(s). As will become apparent, the associated public-key cryptosystem is used to protect the confidentiality of control words needed to descramble scrambled content received by the chip set 402. The use of public-key cryptography allows the chip manufacturer to publish both the CSSN and the CSPK for every chip set that is produced. The manufacturer of the chip sets 402 maintains pairs of numbers, each pair comprising of a chip set serial number CSSN and its associated chip set public key CSPK. The list of (CSSN, CSPK) pairs can be made available to all CA/DRM systems. During the distribution to a CA/DRM system, only the authenticity of this information should preferably be protected.

To prevent an adversary from also using the CSPK to successfully generate and use CW loading messages in a chip set, the systems and methods described below have an additional mechanism that requires the chip set 402 to verify the authenticity of a CW loading message. This mechanism prevents an adversary from issuing control words to the chip set 402 even with the knowledge of the chip set's published CSPK.

The systems and methods described below achieve this by using another asymmetric key pair that is associated with a CA/DRM system associated with the head-end system 4. This key pair includes a (public) signature verification key SVK and a corresponding (secret/private) signature key SK associated with the CA/DRM system. This key pair is for use in an asymmetric cryptographic scheme consisting of a signature generation algorithm and a corresponding signature verification algorithm. The key pair (SK, SVK) is preferably generated by the CA/DRM system associated with the head-end system 4, and its secret key SK does not need to be known to any CA/DRM supplier.

The CA/DRM client 404 may include a communication module for receiving ECMs and/or EMMs and/or other conditional access information forwarded by the chip set 402 and/or the receiver 2. This communication module may be implemented within a keys control module 408 of the CA/DRM client 404. The keys control module 408 may obtain the SVK from conditional access data that it receives from the content delivery module 406 via the chip set 402. SVK may be provided by the head-end system 4 to the CA/DRM client 404.

The signature verification key SVK is stored in a memory element 420 of the CA/DRM client 404. The CA/DRM client 404 may send the signature verification key SVK to the chip set 402 so that the chip set 402 may store the SVK in a memory element 424 of the chip set 402.

As will become apparent from the discussion below, a CA/DRM system associated with the head-end system 4 generates a random value CW* (or interchangeably referred to as a "virtual control word"). The virtual control word CW* is not directly used for (de-)scrambling the content. Instead, a value derivable from CW* and SVK, namely the control word CW, is the key used for (de-)scrambling the content. The head-end system 4 sends the virtual control word CW* to the chip set 402 of the receiver 2 using an ECM. The chip set 402 filters and forwards the received ECM to the CA/DRM client 404 as part of the conditional access data forwarded to the CA/DRM client 404. The keys control module 408 obtains the virtual control word CW* from an ECM that it has received.

The chip set 402 comprises a descrambler 434 for descrambling scrambled content. As mentioned, the chip set 402 does not use CW* directly in the descrambler 434, but derives a CW from CW* and SVK (stored in the memory element 424) using a hash function H implemented by a H-module 432 of the chip set 402. The H-module 432 may merge the two inputs (CW* and SVK) before applying the hash function to the merged inputs to produce the output CW. The H-module 432 may be implemented within a cryptographic/secure module of the chip set 402. The function H may also be any other suitable cryptographic function (i.e. it need not necessarily be a hash function). Possible implementations of the function H preferably have the following property: given an output CW, it is hard (e.g., difficult, computationally difficult, infeasible or computationally infeasible) to find a key pair (SK*, SVK*) and a virtual control word CW** such that SVK* and CW** map to CW (i.e. such that providing SVK* and CW** as inputs to function H, or as inputs to the H-module 432, would result in outputting the control word CW). In certain embodiments, "hard" may mean that an adversary may not be able to derive a key pair (SK*, SVK*) and a virtual control word CW**, such that SVK* and CW** map to CW, in polynomial time or space. In other embodiments, "hard" may be defined by specifying a lower bound on the number of operations or on the size of the memory required to find such values. As a third example, one may define "hard" by specifying an upper-bound on the probability that the property is not satisfied.

An example of a function H with this property is the following: (1) merge the inputs CW* and SVK to produce an intermediate result X, e.g., by appending the value of SVK to the value of CW*, (2) apply a 2nd pre-image resistant hash function to the input X to produce the output CW. To see that the preferred property holds for this example, observe that, given the control word CW and the public key SVK, it will be hard for an adversary to determine an SVK* not equal to SVK, and a virtual control word CW** such that SVK* and CW** map to CW. To see this, assume that it is feasible for an adversary to generate such an SVK* and such a CW**. Then, given the output CW and the inputs SVK and CW*, the same method can be applied to generate a second pre-image comprising of SVK* and CW** to the hash function, as SVK* is not equal to SVK. This implies that the hash function is not 2nd pre-image resistant, contradicting the assumption. As a result, the only option for the adversary is to determine a signature key associated with the public key of the CA/DRM system associated with the head-end system 4 (i.e. SVK) which is, by definition, infeasible for an asymmetric scheme. In addition, notice that the function H satisfies the desired property also in case the virtual control word CW* is known (i.e., in case both inputs to the 2nd pre-image resistant hash function are known). This can be seen as follows: given an output CW and the specified inputs to the 2nd pre-image resistant hash function, it is, by definition, infeasible to determine a second, different set of inputs to the 2nd pre-image resistant hash function that map to the given output CW. This implies that the adversary cannot determine a signature verification key different from SVK that maps to the given CW. The only option for the adversary is to determine a signature key associated with SVK, which is, by definition, infeasible for an asymmetric cryptographic scheme.

After applying the function H, the H-module 432 stores the output CW in a memory element 438 of the chip set 402. Using CW from the memory element 438, the descrambling module 434 may descramble content provided by the content delivery module 406 and transmit descrambled content to a content decoder 440 of the chip set 402 for further processing (e.g. video or audio decompression). The content decoder 440 may be implemented in the receiver 2 as a module separate from (or external to) the chip set 402.

Symmetric encryption is used to protect the confidentiality and the authenticity of a virtual control word CW*. In particular, a symmetric chip set load key CSLK is generated for a chip set 402 (and is preferably unique to that chip set 402) by a CA/DRM system associated with the head end system 4. The CSLK (intended for the CA/DRM client 404, and protected using the confidential and authenticated channel offered by the CA/DRM system) is transmitted along with an initialisation pattern CSLK-init (intended for the chip set 402) to the CA/DRM client 404 connected to the chip set 402. The initialisation pattern CSLK-init includes an encrypted version of CSLK (encrypted using the CSPK of the chip set 402) and, as will be described later, a signature of the encrypted version of CSLK (where the signature is generated using the signature key SK). Hence, the CSLK is encrypted to produce the CSLK-init in such a way that CSLK-init can be processed in the chip set 402 to produce a CSLK value.

In some embodiments, the CSLK (intended for the CA/DRM client 404, and protected using the confidential and authentic channel offered by the CA/DRM system) and the initialization pattern CSLK-init (intended for the chip set 402) are transmitted from the head-end system 4 to the chip set 402 using one or more EMMs, and the chip set 402 may filter out the EMM(s) and forward it/them to the keys control module 408 in the CA/DRM client 404. (If a unique pairing between the CA/DRM client 404 and the chip set 402 is not known within the head-end system 4, then preferably separate EMMs are used for packaging and transmitting CSLK and the initialisation pattern CSLK-init.) The keys control module 408 may then extract CSLK and CSLK-init from the EMM(s) for use by the CA/DRM client 404 and the chip set 402. The CSLK may be stored in a memory element 418 of the CA/DRM client 404 and the CSLK-init may be stored in a memory element 422 of the CA/DRM client 404. The CA/DRM client 404 may subsequently forward the initialisation pattern CSLK-init to the chip set 402.

The CA/DRM client 404 encrypts CW* (that its keys control module 408 has extracted from an ECM that has been forwarded to the keys control module 408) with CSLK (stored in memory element 418) to produce {CW*}$_{CSLK}$ using a symmetric encryption module 444 of the CA/DRM client 404. The encryption of CW* with CSLK may be performed in any suitable security module in the CA/DRM client 404. The encrypted version of CW*, {CW*}$_{CSLK}$, is then transmitted to the chip set 402, where {CW*}$_{CSLK}$ is to be decrypted using a symmetric decryption module 442 of the chip set 402 (corresponding to the symmetric encryption module 444). The decryption module 442 use the CSLK value stored in a memory element 430 of the chip set 404 to obtain CW*.

The initialisation pattern CLSK-init and/or the encrypted version of CW* may be transmitted from the CA/DRM client to chip set 402 using any suitable transmission module in the CA/DRM client 404 communicably connected with the chip set 402. The encrypted version of CW* and/or the initialisation pattern CLSK-init may be received at chip set 402 using yet another communication module in the chip set 402.

To obtain the CSLK value, stored in the memory element 430, for decrypting {CW*}$_{CSLK}$, the chip set 402 includes two cryptographic operations, implemented as a signature verification module 426 and a decryption module 428. The signature verification module 426 and the decryption module 428 may be implemented in any suitable cryptographic module within the chip set 402. The chip set 402 uses the signature verification module 426 and the SVK of the CA/DRM system associated with the head-end system 4 (stored in the memory element 424 of the chip set 402), to verify the authenticity of CSLK-init. If the signature verification module 426 determines that CSLK-init is not authentic (i.e. if the signature has not been generated using an SK associated with SVK), then the chip set 402 may take any suitable subsequent action to ensure that the user of the receiver 2 does not gain access to decrypted content, such as not performing any content decryption until a new CSLK-init message and/or a new SVK have been received so that the new CSLK-init message can be verified. Alternatively, the signature verification module 426 may output a value from which the decryption module 428 will be able to obtain CSLK only if the verification is successful, i.e. if the CSLK-init has been signed using an SK corresponding to the SVK stored in the memory element 424; otherwise, the signature verification module 426 may output a value from which the decryption module 428 will not be able to obtain CSLK if the verification is not successful, i.e. if the CSLK-init has been not been signed using the SK corresponding to the SVK stored in the memory element 424. For example, a signature mechanism with message recovery may be used.

After verification of the authenticity of CSLK-init, the encrypted CSLK in CSLK-init is decrypted using the CSSK of the chip set 402 (stored in the memory element 416). As the CSLK was encrypted by the CSPK of the chip set 402, only the chip set having the corresponding CSSK may correctly decrypt CSLK from the CSLK-init message.

Once the chip set 402 obtains CSLK, then {CW*}$_{CSLK}$ may be decrypted by the decryption module 442 to obtain CW* using the obtained CSLK. The authenticity of CW* is protected, in that an adversary cannot construct an encrypted CW* message for a given CW* that will produce CW* in the chip set 402 if the authenticity of SVK and the authenticity of the CSLK-init message are protected. The authenticity of the CSLK-init message is protected by signing it with SK. Using the H-module 432 and the SVK value stored in the memory element 424, SVK and CW* may be merged and processed to produce CW. The H-module protects the authenticity of the signature verification key SVK, in that CW descrambling will fail if SVK is not authentic. That is, if the signature verification key of a key pair (SK*, SVK*), determined by an adversary not knowing the signature key SK, is provided as input to the chip set (e.g., to load a CSLK chosen by the adversary, and using this CSLK to load a given CW*), then the H-module 432 will not output the correct CW, and consequently, the content descrambling will fail.

The symmetric chip set load key CSLK is used to decrypt CW* values that are encrypted with a symmetric encryption algorithm and the key CSLK. The H-module 432 suitably derives the CW from the CW* and the SVK, such that CW may be loaded into the descrambling module 434 to descramble content. This implementation has the benefit that the chip set 402 only needs to perform public-key cryptographic operation(s) when processing a CSLK-init message to initially obtain CSLK. During normal operation, CSLK and SVK can be stored inside the chip set, and the CW processing overhead resembles that of the existing systems. The computation step associated with the H-module 432 is comparable to that of a normal symmetric encryption (or decryption) step.

To work with the CA/DRM client/chip set configuration described in relation to Figure 4, the head-end system 4 is configured to produce the chip set load key initialisation pattern (CSLK-init) for each chip set 402. Figure 5 schematically illustrates a method for use in such a head-end system 4 of a content delivery network.

Specifically, an EMM generator 518 of the head-end system 4 generates a random chip set load key CSLK for a target chip set 402 (e.g., using a chip set load key generator 508 of the EMM generator 518). The CSLK may be generated using any pseudo-random number generator. Preferably, the EMM generator 518 uses the chip set load key generator 508 to generate a CSLK that is unique to each chip set 402 in a population of chip sets 402 - i.e. each receiver 2 being serviced by the CA/DRM system at the head-end system 4 has its own CLSK different from the other receivers 2. This prevents the (unauthorized) sharing of a message {CW*}$_{CSLK}$.

The EMM generator 518 encrypts the generated CSLK using the CSPK of the target chip set 402 (e.g., using a encryption module 510 of the EMM generator 518).

The EMM generator 518 may comprise a CSPK store 504 that stores the CSPKs of the chip sets 402 being serviced by this CA/DRM system. The encryption module 510 performs an encryption process corresponding to the decryption process performed by the decryption module 428 of the chip set 402.

The EMM generator 518 uses the SK (as stored in memory element 502 of the EMM generator 518) to sign the encrypted CSLK to produce the chip set load key initialisation pattern CSLK-init (e.g., using a signature module 512 of the EMM generator 518). The EMM generator 518 then packages the generated CSLK-init along with the CSLK (intended for the CA/DRM client 404, and protected using the confidential and authentic channel offered by the CA/DRM system) to form an EMM. This EMM is targeted at the CA/DRM client 404 connected to the chip set 402 with the corresponding CSPK or CSSN. If a unique pairing between the CA/DRM client 404 and the chip set 402 is not known within the head-end system 4, then preferably separate EMMs are generated and used for packaging and transmitting CSLK and CSLK-init.

The head-end system 4 includes a CW generator 506 which generates random values for CW*. The CW generator 506 may generate random values for CW* using any pseudo-random number generator.

The head-end system 4 includes an ECM generator 516 that receives a CW* generated by the CW generator 506 and generates an ECM containing the received CW*.

The head-end system 4 includes a multiplexer 524. The multiplexer 524 selects the appropriate data to be transmitted to a CA/DRM module (or scrambling module) 526, choosing at least one of: an ECM output from the ECM generator 516, an EMM output from the EMM generator 518, and content. ECMs and/or EMMs may be passed from the multiplexer 524 to a content delivery module 528 for transmission to the chip set 404. The content passed from the multiplexer 524 is scrambled by the CA/DRM module 526 using CW. This may involve any form of content scrambling technique corresponding to the content descrambling that the content descrambling module 434 is capable of performing. Subsequently, the scrambled content is provided to the content delivery module 528, which transmits the scrambled content to a receiver 2.

The head-end system includes an H-module 520 to produce control words for scrambling content in the CA/DRM module 526. The H-module 520 may be implemented in a cryptographic module. To produce CW, the H-module 520 implements a function H corresponding to the H-module 432 of Figure 4. In particular, the H-module derives CW from the CW* value that is generated by the CW generator 506 and that is transmitted in an ECM provided by the ECM generator 516. The H-module 520 combines the signature verification key SVK stored in a memory element 514 with CW* generated by the CW generator 506 and applies a function H (e.g. a hash function) to convert the CW* value into CW - the above description (and requirements) of the H-module 432 and the function H of the chip set 402 applies to the H-module 520 and its function H. The H-module 432 of the chip set 404 produces the same output CW as the H-module 520 of the head-end system 4 when they are provided with the same input (SVK and CW*).

The methods and systems described above may be used in a system such as the head-end system described in the DVB SimulCrypt specification (DVB = digital video broadcasting) - see ETSI TS 103 197. The DVB SimulCrypt specification allows two or more CA/DRM systems to share a control word CW as a common key. A common head-end system protocol for facilitating the sharing of the CW streams used in scrambling the digital TV content streams is described in the DVB SimulCrypt specification.

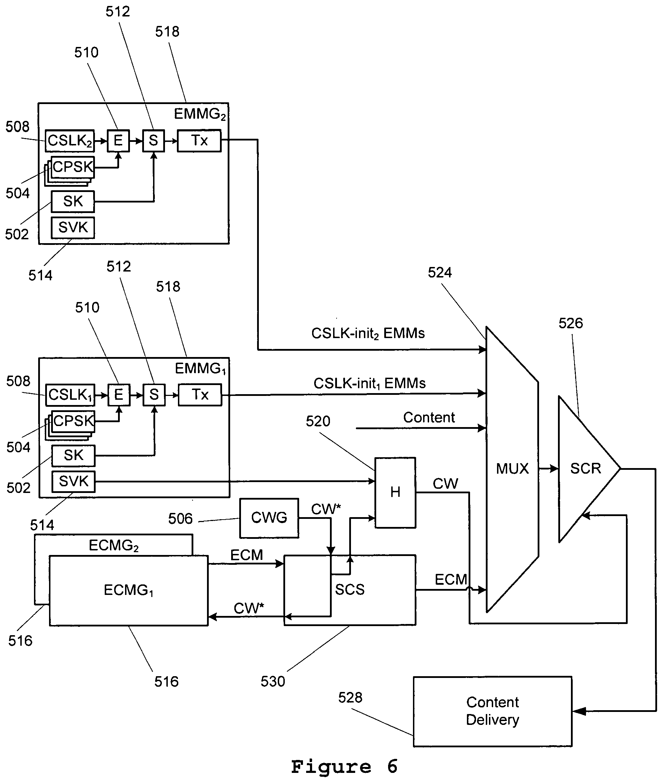

Figure 6 therefore schematically illustrates a method for use in such a head-end system 4 of a content delivery network that makes use of DVB SimulCrypt. In particular, in Figure 6 the head-end system 4 comprises two CA/DRM systems that have respective EMM generators 518 (EMMG$_1$ and EMMG$_2$) and ECM generators 516 (ECMG$_1$ and ECMG$_2$). As is known, a SimulCrypt synchroniser 530 is used to coordinate the multiple ECM generators 516 (for example, by obtaining the CW* output by the CW generator 506, providing the CW* to the ECM generators 516 along with any CA/DRM-specific parameters, acquiring the ECMs from the ECM generators 516, synchronising the timing of the ECMs and their provision to the multiplexer 524). In the normal DVB system as set out in ETSI TS 103 197, the SimulCrypt synchroniser 530 would pass control words to the scrambling module 526 - however, as discussed above, it is the H-module 520 which generates the actual control words CW used for content scrambling and passes those generated control words CW to the scrambling module 526 (because the ECMs do not make use of CW but make use of CW* instead) - therefore, in Figure 6 the SimulCrypt synchroniser 530 is shown as providing CW* to the H-module 520. Hence, a standard SimulCrypt synchroniser 530 may be used, the only difference being that its "control word output" is connected to the H-module 520 instead of directly to the scrambling module 526.

The two CA/DRM systems in Figure 6 are potentially run or operated by different content providers/CA system operators. It will be appreciated that any number of CA/DRM systems may be associated with the head-end system 4 and that embodiments of the invention are not limited to just two CA/DRM systems.

In the system shown in Figure 6, the participating CA/DRM systems share the (SK, SVK) pair. In particular, the first EMM generator 518 (EMMG$_1$) and the second EMM generator 518 (EMMG$_2$) both have knowledge of, and make use of, the same SK and SVK. In particular, they both generate EMMs for the receivers 2 associated with their respective CA/DRM system as described above, based on a common SK and SVK.

The sharing of a common SK and SVK as set out above has a number of drawbacks. In particular:

- A confidential channel between the various CA/DRM systems is required to transport and share the secret key SK. However, a confidential electronic interface between different CA/DRM systems may not exist (especially if the CA/DRM systems are associated with different CA/DRM suppliers). Therefore it would be desirable to let each CA/DRM system generate its own SK(s) and only share the associated (public) signature verification key(s) SVK(s). For instance, such an SK could be generated inside a hardware security module of a CA/DRM system of the head-end system 4 and does not need to be available unprotected at any point in time.

- A renewal of the pair (SK, SVK), e.g. after the secret signature key SK has been compromised, has a similar operational impact for all of the CA/DRM systems participating in the SimulCrypt operation and making use of SK. In particular, new CSLK-init EMMs signed with the new signature key have to be generated and distributed for every participating CA/DRM system and all of the receivers 2 that they are servicing. It would be beneficial to limit the operational impact of a renewal of the pair (SK, SVK).

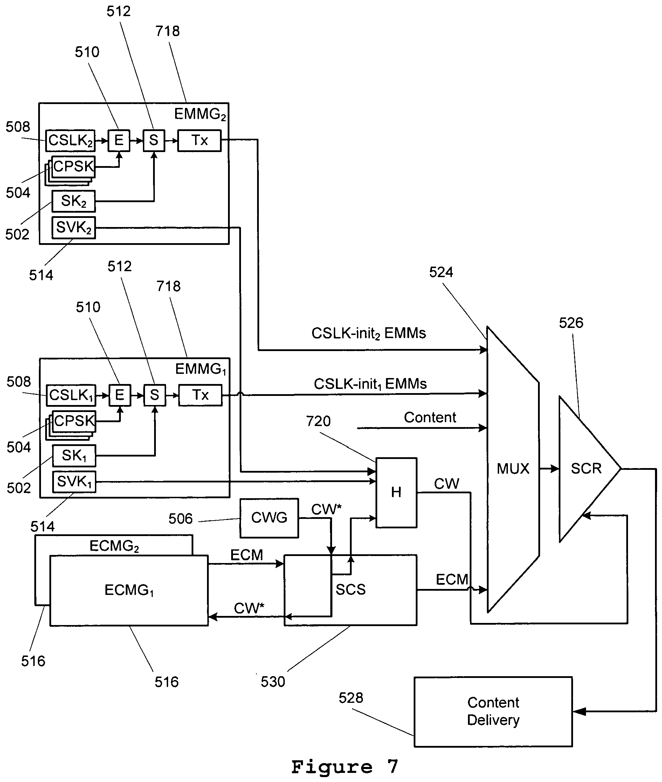

Embodiments of the invention aim to address these issues. Figure 7 therefore schematically illustrates a method for use in a head-end system 4 of a content delivery network that makes use of DVB SimulCrypt. In particular, in Figure 7 the head-end system 4 comprises two CA/DRM systems that have respective EMM generators 718 ($EMMG_1$ and $EMMG_2$) and ECM generators 516 ($ECMG_1$ and $ECMG_2$). This is the same architecture as shown in Figure 6, except that the EMM generators 718 ($EMMG_1$ and $EMMG_2$) comprise and make use of respective signature keys $SK_1$, $SK_2$ and corresponding respective signature verification keys $SVK_1$, $SVK_2$. In particular, the first CA/DRM system has its own signature key $SK_1$ and its own corresponding signature verification key $SVK_1$, whilst the second CA/DRM system has its own (different) signature key $SK_2$ and its own corresponding signature verification key $SVK_2$. Each CA/DRM system independently generates its own pair ($SK_i$, $SVK_i$) and can keep its signature key $SK_i$ secret from all of the other CA/DRM systems - it needs only to publish the signature verification key $SVK_i$. Recall that this a public key, so its confidentiality does not need to be protected. This implies that there is no longer a need for a protected interface between CA/DRM systems in a SimulCrypt operation.

As with Figure 6, the two CA/DRM systems in Figure 7 are potentially run or operated by different content providers/CA system operators. It will be appreciated that in the system shown in Figure 7, any number of CA/DRM systems may be associated with the head-end system 4 and that embodiments of the invention are not limited to just two conditional access end-systems. Hence, in general, there may be n CA/DRM systems and hence n different respective pairs ($SK_i$, $SVK_i$).

The H-module 520 of Figure 6 is replaced by an H-module 720 in the system shown in Figure 7. In particular, as each CA/DRM system now has its own signature verification key $SVK_i$, the H-module 720 is arranged to receive the set of signature verification keys $SVK_1$,...,$SVK_n$ and the CW* output from the CW generator 506. The H-module 720 implements a similar function H as the H-module 520, except that the security requirements are modified to cater for the fact that the H-module 720 operates on a set (or a plurality) of signature verification keys $SVK_1$...,$SVK_n$. In particular, the H-module 720 may merge the inputs CW*,$SVK_1$,...,$SVK_n$ and may then apply a hash function to the merged inputs to produce the output CW. The function H may also be any other suitable cryptographic function (i.e. it need not necessarily be a hash function). Possible implementations of the function H preferably have the following property: given CW, it is hard (e.g., difficult, computationally difficult, infeasible or computationally infeasible) to find or calculate or determine a key pair (SK*, SVK*) and an input to the function H, such that the determined signature verification key SVK* is a signature verification key in the determined input to H, and such that CW is the output of H for this input (i.e. such that providing that input to function H, or as an input to the H-module 720, would result in outputting the control word CW). In certain embodiments, "hard" may mean that an adversary may not be able to derive such an input in polynomial time or space. In other embodiments, "hard" may be defined by specifying a lower bound on the number of operations or on the size of the memory required to find such an input. As a third example, one may define "hard" by specifying an upper-bound on the probability that the property is not satisfied.

An example of a function H with this property is the following: (1) merge the inputs CW*,$SVK_1$,...,$SVK_n$ to produce an intermediate result X, e.g., by concatenating these values, (2) apply a $2^{nd}$ pre-image resistant hash function to the input X to produce the output CW. The analysis provided above when discussing the function H that accepts only a single SVK applies analogously to this modified function H that accepts a set of signature verification keys.

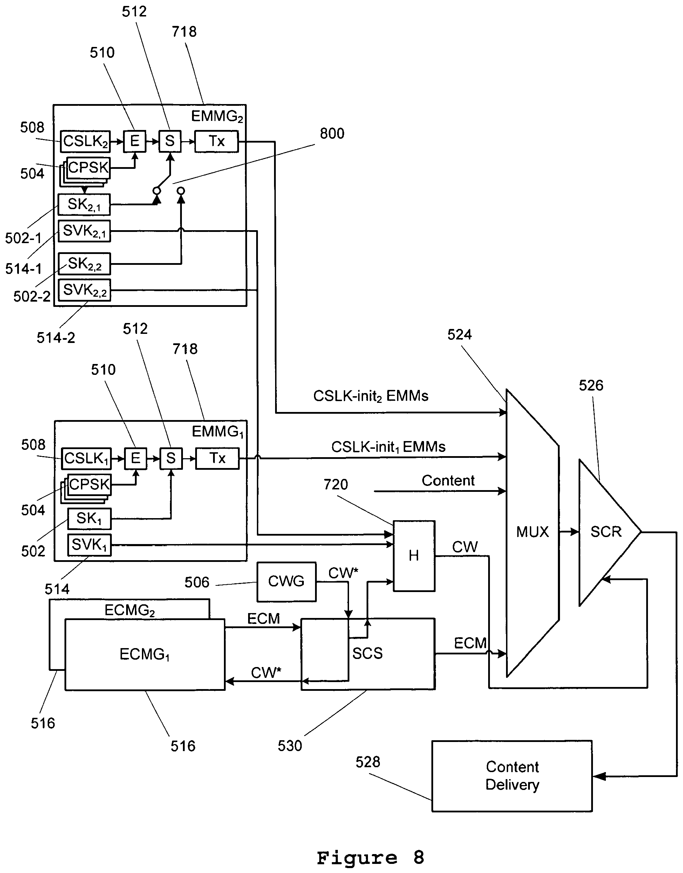

Figure 8 schematically illustrates a further method for use in a head-end system 4 of a content delivery network that makes use of DVB SimulCrypt. The system and method illustrated in Figure 8 are the same as those illustrated in Figure 7, except that one of the CA/DRM systems has a plurality of pairs ($SK_{i,j}$, $SVK_{i,j}$). In particular, in Figure 8, the second CA/DRM system has a first pair ($SK_{2,1}$, $SVK_{2,1}$) and a second pair ($SK_{2,2}$, $SVK_{2,2}$). However, it will be appreciated that a CA/DRM system may have any number of pairs ($SK_{i,j}$, $SVK_{i,j}$) of signature keys and corresponding signature verification keys. The EMM generator ($EMMG_2$) for the second

CA/DRM system may comprise a switch 800 (or some other determining means) for selecting a particular $SK_{2,j}$ (out of the signature keys: $SK_{2,1}$ and $SK_{2,2}$, associated with that CA/DRM system) to use when carrying out the signature process to generate CSLK-init EMMs.

It will be appreciated that any number of CA/DRM systems associated with the head-end system 4 may have a plurality of associated pairs $(SK_{i,j}, SVK_{i,j})$ of signature keys and corresponding signature verification keys. Thus, in general, if there are m (m≥1) CA/DRM systems associated with a head-end system 4, and if the i-th (i=1 ...m) CA/DRM system has $n_i$ ($n_i$≥1 associated pairs $(SK_{i,j}, SVK_{i,j})$ of signature keys and corresponding

$$n = \sum_{i=1}^{m} n_i$$

signature verification keys, then there are pairs $(SK_{i,j}, SVK_{i,j})$ of signature keys and corresponding signature verification keys. The H-module 720 receives the n signature verification keys $SVK_{i,j}$ from the CA/DRM systems as its input, along with the generated virtual control word CW*, and generates a control word CW as described above for Figure 7.

As each CA/DRM system of Figures 7 and 8 uses signature keys (and associated signature verification keys) specific to that CA/DRM system (i.e. two CA/DRM systems do not use the same signature key), a content provider/CA system operator can change the key pair of one CA/DRM system without a significant impact on the other CA/DRM systems (possibly operated by another content provider/CA system operator). More precisely, when a CA/DRM system updates a pair $(SK_{i,j}, SVK_{i,j})$ with a pair (SK, SVK), then: (a) the EMM generator of that CA/DRM system needs to generate and distribute new CSLK-init EMMs (containing CSLK values, and a signature based on the updated signature key SK) for the receivers 2 associated with this CA/DRM system; (b) the other CA/DRM systems should be made aware of the new signature verification key SVK; (c) all CA/DRM systems should distribute the new signature verification key SVK to all their associated receivers (because, as will be described below, the receivers will need access to the new signature verification key). In a broadcast network, this distribution is generally very bandwidth efficient, as the message containing the new signature verification key SVK can be identical for all receivers.

Hence, if one CA/DRM system updates/renews a key pair $(SK_{i,j}, SVK_{i,j})$ (e.g., after the signature key $SK_{i,j}$ is compromised) with an updated (SK, SVK) pair, then the impact on the other CA/DRM systems in the SimulCrypt operation is minimal. Moreover, if the signature key $SK_{i,j}$ is compromised, then the head-end security of the other CA/DRM systems is not compromised as their own signature keys are not the same as the compromised signature key. These other CA/DRM systems simply need to be made aware of the new updated signature verification key SVK and these other CA/DRM systems need to make the receivers 2 that they service also aware of the new updated signature verification key SVK, which is a straightforward operation for these other CA/DRM systems. If the signature key $SK_{i,j}$ is compromised, then receiver security is restored for all CA/DRM systems in the SimulCrypt operation as soon as the updated signature verification key SVK is used as input to the H-module (instead of using $SVK_{i,j}$), revoking the compromised signature key $SK_{i,j}$.

If a CA/DRM system operator wants to renew a key pair $(SK_{i,j}, SVK_{i,j})$ with a new key pair (SK, SVK), then switching to the new key pair happens simultaneously for all receivers 2 in an operator's population of receivers 2 (as the control words generated to scramble content will be based on the updated SVK, via the H-module 720, at the point of switching over to the new key pair). From an operational point of view, there is a risk that not all these receivers 2 have received all required information (via EMMs) when the provider starts using the new key pair (more precisely: the new SVK, a receiver's unique CSLK-init pattern signed with the new SK, or a CSLK intended for the CA/DRM client might not have been transmitted to, or received at, a receiver 2 via an EMM when the new SVK is used to generate control words). This can potentially cause a number of receivers to "black-out" for a while as they will not be able to successfully descramble content (as they will not be able to use the updated CSLK messages or the updated SVK). However, CA/DRM systems that have a plurality of associated $(SK_{i,j}, SVK_{i,j})$ pairs have the following advantage. A first (current) key pair $(SK_{i,j}, SVK_{i,j})$ can be used to generate CSLK-init pattern messages, that is, the signature key $SK_{i,i}$ is used to sign CSLK-init patterns. The signature key $SK_{i,k}$ of a second key pair $(SK_{i,k}, SVK_{i,k})$ is reserved for future use (securely storing the key $SK_{i,k}$). The signature verification keys of both the first and second pair (that is, $SVK_{i,j}$ and $SVK_{i,k}$) are used by the H-module 720 to generate control words CW for scrambling content. Suppose that the operator wants to revoke the first key pair $(SK_{i,j}, SVK_{i,j})$ (e.g., in case the signature key $SK_{i,j}$ is compromised). First, the CA/DRM system retrieves $SK_{i,k}$ from secure storage. Next, the CA/DRM system generates new CSLK-init EMMs, using $SK_{i,k}$ as the signature key (if CSLK is also updated, then also EMMs containing the new CSLK values for the CA/DRM clients need to be generated). The CA/DRM system distributes the EMMs to the receivers 2. The CA/DRM system also generates a third key pair $(SK_{i,w}, SVK_{i,w})$, and distributes the public signature verification key $SVK_{i,w}$ to all CA/DRM systems in the SimulCrypt operation. All CA/DRM systems distribute $SVK_{i,w}$ to their receivers (e.g., using an EMM). As long as the $SVK_{i,j}$ and $SVK_{i,k}$ are used by the H-module 720 to generate control words CW for scrambling content, the receivers 2 will accept (or continue to operate correctly and perform correct descrambling with) CSLK-init messages signed with the signature key $SK_{i,j}$ or $SK_{i,k}$. That is, during this time, the chip sets 402 can independently switch to using the new/updated CSLK-init message signed with $SK_{i,k}$, instead of forcing all chip sets 402 to switch at the same time. For instance, the CA/DRM system can request a group of CA/DRM clients 404 at a time to start using the new CSLK EMMs (the new CSLK-init pattern being signed with $SK_{i,k}$). This restricts the number of receivers 2 that can black-out simultaneously. After the CA/DRM system has requested all receivers 2 to use the new CSLK (EMMs), then receiver security can be restored by using $SVK_{i,w}$ as input to the H-module 720 instead of $SVK_{i,j}$. After this, the first key pair ($SK_{i,j}$, $SVK_{i,j}$) is renewed with the second key pair ($SK_{i,k}$, $SVK_{i,k}$), and receiver security is restored for the content encrypted with control words derived using $SVK_{i,w}$, in that the chip set will not accept CSLK-init messages signed with (the compromised) $SK_{i,j}$, Note that this process can be applied iteratively; the key pairs in the next iteration are ($SK_{i,k}$, $SVK_{i,k}$) and ($SK_{i,w}$, $SVK_{i,w}$).

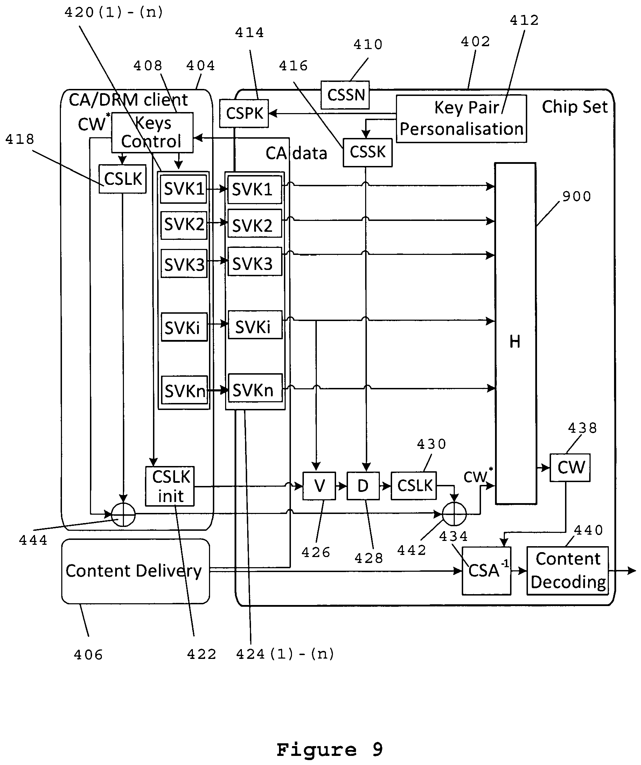

Figure 9 schematically illustrates an example method of using a chip set. This is the same as illustrated in Figure 4 (and therefore only the differences between the two Figures shall be described below). The system and method shown in Figure 9 is compatible with the systems illustrated in Figures 7 and 8.

In particular, instead of the CA/DRM client 404 being provided with a single signature verification key SVK and providing this to the chip set 402, the CA/DRM client 404 receives the set of n signature verification keys $SVK_1$,...,$SVK_n$ and provides these n signature verification keys $SVK_1$,...,$SVK_n$ to the chip set 402 (without loss of generality, a single subscript is used to distinguish the different signature verification keys; more than one key in this set may be associated with a single CA/DRM system). The CA/DRM client 404 may store each signature verification key $SVK_i$ in a corresponding memory element 420(i) of the CA/DRM client 404; the chip set 402 may store each signature verification key $SVK_i$ in a corresponding memory element 424(i) of the chip set 402.

The CA/DRM client 404 is informed of the set of signature verification keys $SVK_1$,...,$SVK_n$ by the CA/DRM system (associated with the head-end system 4) that is servicing the receiver 2 of the CA/DRM client 404 as has been set out above.

Additionally, the H-module 432 of Figure 4 has been replaced in Figure 9 with an H-module 900. The H-module 900 operates in the same way as the H-module 720 of the systems illustrated in Figures 7 and 8. Thus, provided that the chip set 402 has been provided with legitimate/current signature verification keys $SVK_1$,...,$SVK_n$, and provided that it has managed to successfully obtain a correct virtual control word CW*, then the output of the H-module 900 will be the same control word CW as that output by the H-module 720 in the head-end system 4 and hence the chip set 402 will be able to successfully descramble the scrambled content stream.

Preferably, a security requirement for the chip set implementation is that a CW* and a set of signature verification keys $SVK_1$,...,$SVK_n$ may only be provided to the H-module 900 to derive a CW (or such a derived CW may only be used for content descrambling) if the authenticity of the CSLK-init message associated with the encrypted CW* is verified with one of the keys in the set of signature verification keys $SVK_1$,...,$SVK_n$ and if the CSLK-init message is found to be authentic.

As the chip set 402 has a plurality of signature verification keys $SVK_1$,...,$SVK_n$ available to it, the signature verification module 426 is arranged to select the signature verification key $SVK_i$ corresponding to the CSLK-init pattern that it receives from the CA/DRM client 404. For example, the head-end system 4 may assign a unique key identifier $ID_i$ to $SVK_i$, and may append $ID_i$ to $SVK_i$ and to a CSLK-pattern signed with the corresponding signature key $SK_i$. This enables the signature verification module 426 to select the associated signature verification key $SVK_i$ from the received set of signature verification keys $SVK_1$,...,$SVK_n$. It will be appreciated that other mechanisms may be used to allow the signature verification module 426 to select the correct signature verification key $SVK_i$. For example, the signature verification module 426 may be arranged to try each of the signature verification keys $SVK_1$,...,$SVK_n$ until one of them successfully verifies the signature of the CSLK-init pattern - if none of them successfully verify this signature, then the signature verification process has failed.

In some embodiments, the set of signature verification keys $SVK_1$,...,$SVK_n$ and the CSLK-init message are provided to the chip set 402 with every encrypted CW*. In such embodiments, the set of signature verification keys does not need to be stored for future use inside the chip set 402.

In practice, the CA/DRM client 404 and the chip set 402 will use the key CSLK to protect the transfer of multiple virtual control words CW* from the CA/DRM client 404 to the chip set 402. To avoid time-consuming public-key operations for deriving every CW* (that is, the public-key decryption performed by the decryption module 428 using the CSSK of the chip set 402, and the signature verification performed by the signature verification module 426 using $SVK_i$), in some embodiments the key CSLK is stored (and maintained) inside the chip set 402 after it has been obtained (e.g. in the memory module 430). Thus, the public-key operations of the signature verification module 426 and the decryption module 428 only need to be performed when the chip set 402 receives a new CSLK-init pattern from the CA/DRM client 404.

In some embodiments, the set of signature verification keys $SVK_1$,...,$SVK_n$ to be used as input to H-module 900 is provided to the chip set 402 with every encrypted CW* from the CA/DRM client 404. In such embodiments, the set of signature verification keys does not need to be stored for future use inside the chip set 402. If the set $SVK_1$,...,$SVK_n$ is provided with an encrypted CW* message from the CA/DRM client 404, then before a stored CSLK is used to decrypt the encrypted CW*, some embodiments of the invention are arranged for the chip set 402 to verify whether CSLK (as stored in the memory module 430) has been loaded/obtained using one of the keys in the received set $SVK_1,...,SVK_n$ (i.e. whether the process to initially obtain and store CSLK involved the signature verification module 426 performing a signature verification process on a received CSLK-init pattern using one of the received signature verification keys $SVK_1,...,SVK_n$). One way to achieve this is the following: after processing a CSLK-init message (received together with the associated signature verification key $SVK_i$), the chip set 402 computes a cryptographic hash value of the signature verification key $SVK_i$ (that it used to verify the authenticity of the CSLK-init pattern), and the chip set 402 stores this hash value together with CSLK. For every signature verification key in the received set of signature verification keys (received together with the encrypted CW*), the chip set 402 can compute its hash value and can compare the computed hash value with the hash value stored with the CSLK required to decrypt the encrypted CW* - if this check reveals that the stored CSLK has been loaded using a valid signature verification key, then the stored CSLK may be used by the decryption module 434 to decrypt the encrypted CW*. Notice that in such embodiments a CSLK-init message only needs to be provided with the associated signature verification key $SVK_i$ (instead of the set of signature verification keys). That is, in such embodiments the signature verification module 426 does not need to be arranged to select the signature verification key $SVK_i$ from a set.

In some embodiments, the set of keys $SVK_1,...,SVK_n$ (and their key identifiers $ID_1...ID_n$) may be stored inside the chip set 402 for future use. That is, the stored set of keys (and their key identifiers) are used to process CSLK-init messages and encrypted CW* messages provided to the chip set 402 from the CA/DRM client 404. In such an embodiment, one or more CSLK-init patterns and one or more encrypted CW* can be provided to the chip set 402. The chip set 402 can derive CSLK from a CSLK-init message using the stored set of keys $SVK_1,...,SVK_n$ and the stored set of key identifiers (used by signature verification module 426 to select the correct key from the stored set). The chip set 402 may store CSLK for future use. The chip set 402 uses the derived CSLK to obtain CW* from the encrypted CW*. Next, the chip set 402 can provide CW* and the stored set of keys $SVK_1,...,SVK_n$ as input to the H-module 900 to produce the output CW. In this way, communication costs between the CA/DRM client 404 and the chip set 402 are reduced, and overall system performance may be improved.

In some embodiments, multiple CSLK keys are stored (and maintained) inside the chip set 402 after they have been obtained (as set out above). Storing multiple CSLK keys can avoid having to perform public-key operations when switching from a current stored CSLK to another stored CSLK. This is particularly useful if the chip set 402 supports the concurrent use of multiple CA/DRM clients 404, each of which may use a different CSLK (and possibly a different set of signature verification keys), as the chip set 402 can then perform (fast) switching between CSLKs as and when desired/necessary.

If the set of keys $SVK_1,...,SVK_n$ (and their key identifiers $ID_1,...,ID_n$, or cryptographic hash values of the keys $SVK_1,...,SVK_n$) are stored inside the chip set 402 for future use, and if a new set of signature verification keys is provided to the chip set 402 (to be stored inside the chip set 402 instead of the set of keys $SVK_1,...,SVK_n$), then the chip set 402 may be arranged to determine whether one or more of the stored CSLK(s) was(were) loaded using a key that is not present in the set of newly received signature verification keys. For example, the key identifier $ID_i$ (or cryptographic hash value) of the signature verification key $SVK_i$ used to verify the authenticity of the CSLK-init message may be stored together with CSLK. The newly received set of signature verification keys, the stored set of signature verification keys $SVK_1,...,SVK_n$ (and their key identifiers or their cryptographic hash values) and the key identifiers (or the cryptographic has values) stored with the CSLK(s) can be used to determine whether one or more of the stored CSLK(s) was(were) loaded using a key that is not present in the set of newly received signature verification keys. If there are any such CSLK(s), then the chip set 402 may be arranged to not use such a CSLK to derive a CW* (e.g., such CSLKs can be de-activated or simply deleted from the memory module 430). Alternatively, all stored CSLKs may be deleted from the memory module 430 whenever a new set of verification keys is loaded and stored inside the chip set 402. Further, if stored CSLK(s) was(were) de-activated, then the chip set 402 may be arranged to (re-)activate the CSLK(s) if a new set of signature verification keys is provided to the chip set 402, and if the associated CSLK-init pattern was verified using one of the keys in this new set. For instance, (re-)activation can be useful if the chip set 402 supports the concurrent use of multiple CA/DRM clients 404, each of which may use a different CSLK and a different set of signature verification keys, as the chip set 402 can then perform (fast) switching between CSLKs as and when desired/necessary.

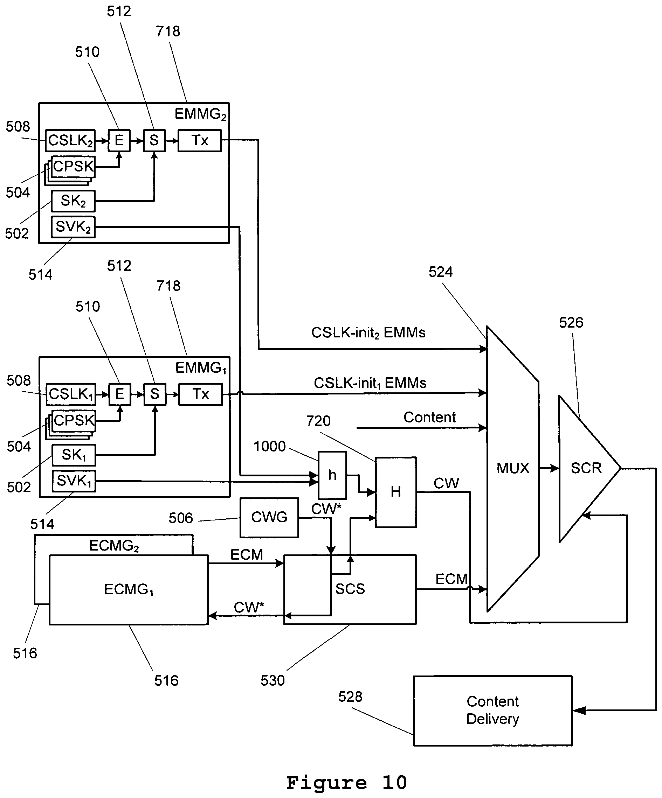

Figures 10-12 schematically illustrate modified versions of the systems and methods illustrated, respectively, in Figures 7-9. The difference is that the head-end systems 4 and the chip sets 402 illustrated include an h-module 1000. The h-module 1000 is arranged to receive, at its input, the set of signature verification keys $SVK_1,...,SVK_n$ instead of this set of signature verification keys being provided to the respective H-module 720, 900. The h-module 1000 uses its input to produce an intermediate value Z (which the chip set 402 may store for future use in a memory module 1010 of the chip set 402). The H modules 720, 900 then receive, as their input, the intermediate value Z (i.e. the value derived from the set of signature verification keys $SVK_1,...,SVK_n$) and the virtual control word CW* and output a control word CW accordingly - in this sense, they operate in a similar manner to the H-module 432 of Figure 4 (which has two inputs, one being a CW* and the other being a second value). The h-module 1000 may operate in exactly the same way as the H-module 720, 900 except that it does not receive a virtual control word CW* as its input. For example, the h-module 720 may merge the inputs $SVK_1,...,SVK_n$ and may then apply a cryptographic hash function h to the merged inputs to produce the output Z. The function h may also be any other suitable cryptographic function (i.e. it need not necessarily be a hash function). Possible implementations of the function h preferably have the following property: given Z, it is hard (e.g., difficult, computationally difficult, infeasible or computationally infeasible) to find or calculate or determine a key pair (SK*, SVK*) and an input to h, such that the determined signature verification key SVK* is a signature verification key in the determined input to h, and such that Z is the output of h for this input (i.e. such that providing that input to function h, or as an input to the h-module 1000, would result in outputting the value Z). In certain embodiments, "hard" may mean that an adversary may not be able to derive such an input in polynomial time or space. In other embodiments, "hard" may be defined by specifying a lower bound on the number of operations or on the size of the memory required to find such an input. As a third example, one may define "hard" by specifying an upper-bound on the probability that the property is not satisfied. Possible ways of implementing the function h include the various ways of implementing the function H (as set out above).

In general, though, for these embodiments (that make use of the h-module 1000), the joint implementation of the function H and the function h preferably has the following property: given CW, it is hard (e.g., difficult, computationally difficult, infeasible or computationally infeasible) to find or calculate or determine a key pair (SK*, SVK*) and an input to the joint implementation of the function H and the function h, such that the determined signature verification key SVK* is a signature verification key in the determined input, and such that CW is the output of the joint implementation of the function H and the function h for this input. In certain embodiments, "hard" may mean that an adversary may not be able to derive such an input in polynomial time or space. In other embodiments, "hard" may be defined by specifying a lower bound on the number of operations or on the size of the memory required to find such an input. As a third example, one may define "hard" by specifying an upper-bound on the probability that the property is not satisfied.

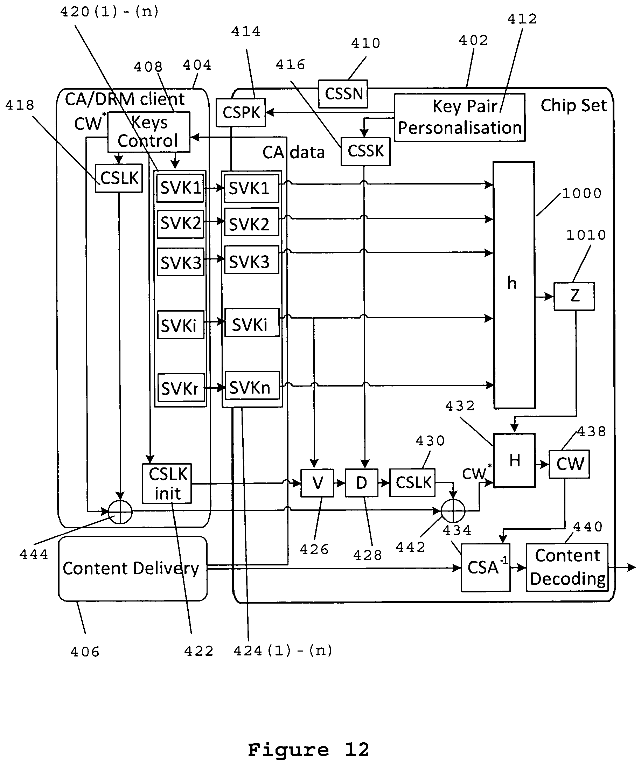

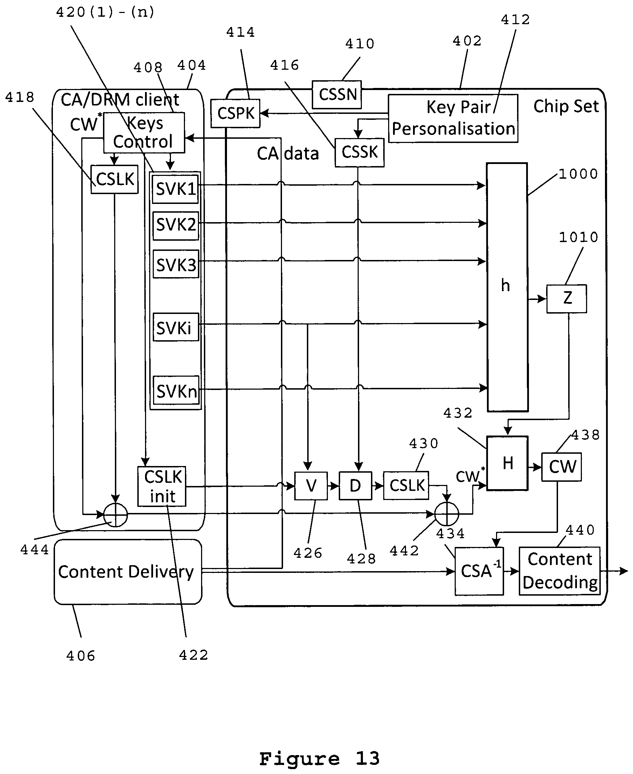

Figure 13 schematically illustrates a variation of the chip set 402 of Figure 12 in which the chip set 402 is not arranged to store the set of signature verification keys $SVK_1,...,SVK_n$ for future use. Instead, the chip set 402 may simply store the output of the h-module 1000, i.e. the intermediate value Z, and use this intermediate value Z as an input to the H-module 900. In this way, the storage requirements of the chip set 402 can be reduced, as storing the intermediate value Z will generally require much less memory than storing the set of signature ver-

ification keys $SVK_1,...,SVK_n$. In addition, performance for deriving CW from CW* and Z may be improved.

In some embodiments, after processing a CSLK-init message (received together with the associated signature verification key $SVK_i$), the chip set 402 computes a cryptographic hash value of the signature verification key $SVK_i$ (that it used to verify the authenticity of the CSLK-init pattern), and the chip set 402 stores this hash value together with CSLK. If a set of signature verification keys is provided to the chip set 402 (used as input to the h-module 1000, producing a value Z to be stored inside the chip set 402 for deriving control words), then the chip set 402 may compute the hash value of each signature verification key in the set, and use the computed hash values and the stored hash values (one stored hash value with every stored CSLK) to determine whether one or more of the stored CSLK(s) was(were) loaded using a key that is present in the set of received signature verification keys. As before, such a mechanism can be used to activate, deactivate or delete CSLK(s), based on the received set of signature verification keys.

In some embodiments, after the chip set 402 receives a set of signature verification keys $SVK_1,...,SVK_n$, it computes a cryptographic hash value for each of these keys, and stores these values with the value of Z for future use. For example, if a CSLK-init message is received together with the associated signature verification key $SVK_i$, the chip set 402 can compute a cryptographic hash value of the signature verification key $SVK_i$. Next, the chip set compares the computed hash value with the stored hash values, and only processes the CSLK-init message if (at least) one of the stored hash values is equal to the computed hash value. In this way CSLK-init messages are only processed if $SVK_i$ is an element of the set of signature verification keys $SVK_1,...,SVK_n$ used to produce the stored Z.

In some embodiments, a set of cryptographic hash values (comprising, for each key in the set of signature verification keys $SVK_1,...,SVK_n$, a corresponding cryptographic hash value derived from that signature verification key) is provided to the function H (or the function h if present) instead of the set of signature verification keys $SVK_1,...,SVK_n$. In such embodiments, the chip set 402 does not need to receive (or store) the set of signature verification keys; the chip set 402 only needs to receive the set of cryptographic hash values and the signature verification key associated with a CSLK-init message. The chip set 402 can compute the cryptographic hash value of the received signature verification key (received with the CSLK-init message), and compare this hash value with the cryptographic hash values in the received (or stored) set of cryptographic hash values to determine if the signature verification key provided with the CSLK-init message is associated with one of the signature verification keys in the set $SVK_1,...,SVK_n$. In one embodiment, the CA/DRM (head-end) system can compute the set of cryptographic hash values. Next, the CA/DRM (head-end) system can send the set of cryptographic hash values to its CA/DRM clients. In such embodiments, the CA/DRM system only needs to provide the signature verification key(s) associated with that CA/DRM system to the CA/DRM clients associated with that CA/DRM system (to process CSLK-init messages associated with that CA/DRM system). Communication costs, storage costs and computation costs may be reduced in such embodiments. Alternatively, it may be the CA/DRM client that computes the set of cryptographic hash functions (having received the set of signature verification keys $SVK_1,...,SVK_n$).

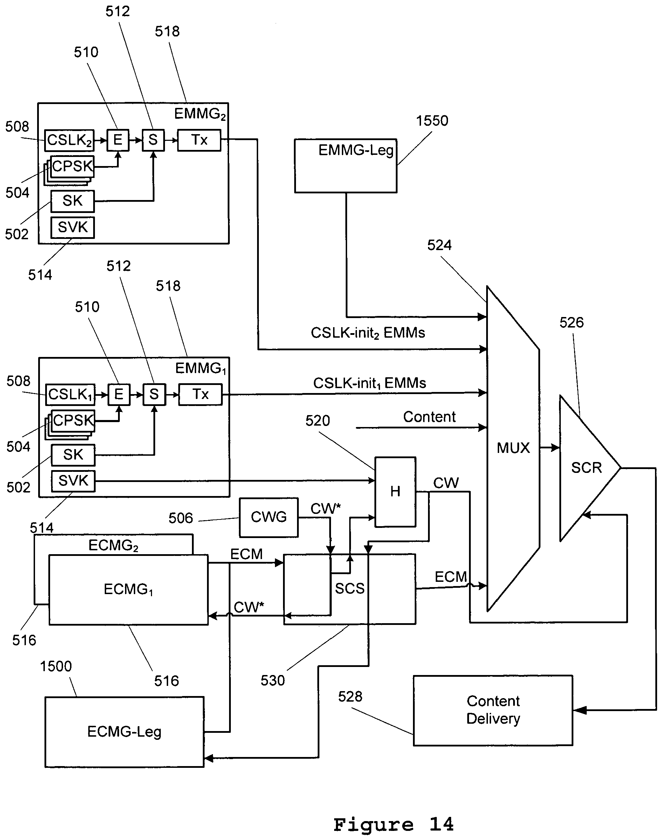

Figures 14-18 correspond to Figures 6, 7, 8, 10 and 11 respectively. However, in the systems shown in Figures 14-18, there is one or more legacy ECM generators 1500 and one or more legacy EMM generators 1550. The legacy ECM generators 1500 and the legacy EMM generators 1550 correspond to one or more CA/DRM systems associated with the head-end system 4 that do not make use of the methods described above for protecting the confidentiality and authenticity of control words (that is, these CA/DRM systems do not make use of CW*). Thus, the legacy ECM generators 1500 are arranged to receive the CW generated by the H-module 900 and generate ECMs based on the CW - this is in contrast to the ECM generators 516 which generate ECMs based on the virtual control word CW*. In the systems shown in Figures 14-18, the legacy ECM generators 1500 are arranged to receive the CW via the SimulCrypt synchroniser 530, but it will be appreciated that this is not essential. Similarly, the legacy EMM generators 1550 generate EMMs and provide those EMMs to the multiplexer 524 - they do not provide an input to the H-module 900 or the h-module 1000.

In some embodiments, the output of the function H may include more than one value to be used in the content (de-)scrambling mechanism. For instance, the output of the H-module can consist of the virtual control word CW* and a second key derived from CW* and the set of keys $SVK_1,...,SVK_n$ (or the value Z if h-module 1000 is used). These two derived keys can then be used in a super-scrambling solution where one key is used in a first scrambling step and the other key is used in a second scrambling step at the head-end system 4. The chip set 402 may be modified to perform two corresponding descrambling steps instead of one. In general, the output of the H-module may include multiple content (de-)scrambling keys that can be used in a super-scrambling solution consisting of multiple content (de-)scrambling steps. The output of the function H may also include more than one control word. Each of these control words can be used for (de-)scrambling an associated piece of content. For instance, the output of the H-module can consist of two control words. The first control word can be used for (de-)scrambling a first piece of content, and the second control word can be used for (de-scrambling) a second piece of content. In embodiments in which the output of the function H includes more than one value to be used in the content (de-)scrambling mechanism, possible implementations of the function H preferably have the following property: given an output Y, it is hard (e.g., difficult, computationally difficult, infeasible or computationally infeasible) to find or calculate or determine a key pair (SK*, SVK*) and an input to H, such that the determined signature verification key SVK* is a signature verification key in the determined input to H, and such that Y is the output of H for this input. (If the h-module 1000 is used, then the preferred property can be adapted as mentioned before). In addition, one may require that the preferred property of the function H holds independently for parts of the output, e.g., for all keys associated with one piece of content. Notice that this is a stronger property which is useful, but not strictly necessary, as the weaker property (i.e., the property described above on the output Y) already implies that the descrambling of at least one of the pieces of content associated with the output of H will fail.

In some embodiments, a first subset of the set of signature verification keys $SVK_1,...,SVK_n$ (or hash values thereof) is provided to the function h, and the input of the function H comprises both the output of the function h and a second subset of the set of signature verification keys $SVK_1,...,SVK_n$ (or hash values thereof). These two subsets may each comprise one or more (or all) of the signature verification keys $SVK_1,...,SVK_n$. The union of these two subsets is the entire set of signature verification keys $SVK_1,...,SVK_n$. These two subsets may or may not overlap.

In some embodiments, the (bit-)length of a virtual CW* may be larger than the (bit-)length of a CW, e.g. if the output of the H-module includes more than one control word.

In some embodiments, the function H and/or the function h may receive one or more additional inputs and generate their respective outputs based on those one or more additional inputs.

While generic public-key cryptography modules have been described and used in the above-mentioned embodiments of the invention, it will be appreciated that any other suitable cryptographic operations and infrastructure may be used as long as the authenticity and confidentiality of a CW loading message are provided. As an example, the authenticity mechanism may use a symmetric scheme in which both SK and SVK are secret keys. A well known example of such a system is RSA with a randomly selected encryption (or decryption) exponent, both of which are kept secret. If an authenticity mechanism is used in which SVK is a secret key, then preferably the SVK is transmitted in encrypted form to the chip set 402, e.g., using the chip set secret key CSSK of the associated chip set 402 as an encryption key. However, note that some of the advantages described in this disclosure do not apply if a symmetric authenticity mechanism is used. It may also be possible to insert additional key layers to the methods and systems described above, or to remove a key layer in the methods and systems described above.

The various symmetric and asymmetric encryption/decryption modules and schemes mentioned above may make use of any symmetric or asymmetric encryption/decryption algorithms currently known or devised in the future. Similarly, the various signature generation and verification modules and schemes mentioned above may make use of any signature generation and verification algorithms currently known or devised in the future.

It will be appreciated that embodiments of the invention may be implemented using a variety of different information processing systems. In particular, although the Figures and the discussions thereof provide exemplary architectures, these are presented merely to provide a useful reference in discussing various aspects of the invention. Of course, the description of the architecture has been simplified for purposes of discussion, and it is just one of many different types of architecture that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program," as used herein, may be a sequence of instructions designed for execution on a computer system, and may include a subroutine, a function, a procedure, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

**Claims**

1. A method for securely obtaining a control word in a chip set of a receiver, said control word for descrambling scrambled content received by the receiver, the method comprising, at the chip set:

    receiving a secured version of a chip set load key associated with the chip set, wherein the secured version of the chip set load key is secured to protect the authenticity and confidentiality of the chip set load key, wherein the secured version of the chip set load key comprises an encrypted chip set load key, and a signature based on the chip set load key using a private signature key associated with a conditional access/digital rights management system; obtaining the chip set load key from the secured version of the chip set load key, wherein obtaining the chip set load key from the secured version of the chip set load key comprises:

        a) verifying the signature using a public signature verification key corresponding to the private signature key associated with the conditional access/digital rights management system, wherein the signature verification key is one of a plurality of public signature verification keys, and
        b) decrypting the encrypted chip set load key,

the method further comprising:

    receiving a secured version of a virtual control word that is the virtual control word encrypted using the chip set load key from a conditional access/digital rights management client communicably connected to the chip set; obtaining the virtual control word from the secured version of the virtual control word by decrypting the secured version of the virtual control word using the chip set load key; using a first cryptographic function to produce a given output, the given output comprising at least one control word, from an input that comprises the virtual control word and either the plurality of public signature verification keys or one or more values derived from the plurality of public signature verification keys, each signature verification key being associated with a conditional access/digital rights management system, wherein the first cryptographic function has the property that it is infeasible to determine a key pair including a private signature key and a public signature verification key and an input for the first cryptographic function comprising the determined signature verification key or one or more values derived, at least in part, from the determined signature verification key, such that the first cryptographic function produces the given output from the determined input; receiving scrambled content, the scrambled content being content that has been scrambled using the at least one control word; and descrambling the received scrambled content using the at least one control word produced by using the first cryptographic function.

**2.** The method according to claim 1, comprising receiving and storing the signature verification keys of the plurality of signature verification keys, wherein said first cryptographic function is arranged to use said stored signature verification keys as a part of the input to the first cryptographic function.

**3.** The method according to claim 1, comprising:

receiving the plurality of signature verification keys;
generating a derived value from the received plurality of signature verification keys; and
storing the generated derived value;
wherein said first cryptographic function is arranged to use said stored derived value as a part of the input to the first cryptographic function.

**4.** The method according to any one of the preceding claims, wherein the encrypted chip set load key is the chip set load key encrypted using a public key associated with the chip set, wherein decrypting the encrypted chip set load key uses a secret key associated with the chip set, the secret key corresponding to the public key associated with the chip set.

**5.** The method according to claim 4, comprising the chip set storing the chip set load key obtained from the secured version of the chip set load key so that the stored chip set load key can be used to decrypt secured versions of virtual control words received by the chip set.

**6.** The method according to claim 5, comprising:

receiving the plurality of signature verification keys along with the secured version of the virtual control word; and
determining whether the signature based on the stored chip set load key was verified using one of the received signature verification keys and, if it is determined that the signature based on the stored chip set load key was not verified using one of the received signature verification keys, not using the stored chip set load key to decrypt the secured version of the virtual control word received by the chip set.

**7.** The method according to any one of claims 4 to 6, in which the receiver is one receiver in a plurality of receivers, each receiver in the plurality of receivers having a corresponding chip set that has an associated secret key, wherein the secret keys associated with the chip sets of the receivers in the plurality of receivers are different from each other.

**8.** A method for providing a control word to a chip set of a receiver, the chip set being communicatively connected to a conditional access/digital rights management CA/DRM client, the control word to enable the receiver to descramble scrambled content transmitted to the receiver, the method comprising:

transmitting to the CA/DRM client a first secured version of a chip set load key associated with the chip set, wherein the first secured version of the chip set load key comprises the chip set load key protected using the confidential and authenticated channel offered by the CA/DRM system;
transmitting to the chip set a second secured version of the chip set load key associated with the chip set, wherein the second secured version of the chip set load key is secured to protect the authenticity and confidentiality of the chip set load key, wherein the second secured version of the chip set load key comprises the encrypted chip set load key and a signature based on the chip set load key using a private signature key associated with the CA/DRM system and corresponding to one of a plurality of public signature verification keys;
generating a virtual control word at a head-end system of the CA/DRM system;
generating a control word at the head-end system, the control word being obtained as the output of a first cryptographic function from an input that comprises the virtual control word and either the plurality of public signature verification keys or one or more values derived from the plurality of public signature verification keys, each signature verification key being associated with a CA/DRM system, wherein the first cryptographic function has the property that it is infeasible to determine a key pair including a private signature key and a public signature verification key and an input for the first cryptographic function comprising the determined signature verification key or one or more values derived, at least in part from the determined signature verification key, such that the first cryptographic function produces the given output for the determined input;
transmitting the virtual control word from the head-end system to the CA/DRM client via the receiver as part of the conditional access data of the CA/DRM system;
generating at the CA/DRM client a secured version of the virtual control word, wherein the secured version of the virtual control word is the virtual control word encrypted by the CA/DRM client using the chip set load key;
transmitting by the CA/DRM client the secured version of the virtual control word to the chip set;
scrambling content at the head-end system using the control word to produce scrambled content; and
transmitting the scrambled content to the chip set.

9.  The method according to claim 8, wherein the encrypted chip set load key is the chipset load key encrypted using a public key associated with the chip set.

10. The method according to claim 8 or 9, comprising transmitting the control word from the head-end system to a second conditional access/digital rights management client via a second receiver, wherein the second conditional access/digital rights management client is communicably connected to a second chip set of the second receiver.

11. The method according to any one of the preceding claims, wherein at least two of the signature verification keys in the plurality of signature verification keys are associated with the same conditional access/digital rights management system.

12. The method according to any one of the preceding claims, wherein at least two of the signature verification keys in the plurality of signature verification keys are associated with different conditional access/digital rights management systems.

13. The method according to any one of the preceding claims, in which a derived value is produced by providing the plurality of signature verification keys to a second cryptographic function, wherein the second cryptographic function has the property that it is infeasible to generate a key pair including a signature key and a signature verification key and an input for the second cryptographic function comprising the generated signature verification key such that the second cryptographic function produces that derived value from the generated input.

14. The method according to any one of the preceding claims, in which the one or more derived values comprise, for each signature verification key in the plurality of signature verification keys, a corresponding cryptographic hash value of that signature verification key.

15. A chip set, for a receiver, for securely obtaining a control word, the chip set arranged to carry out a method according to any one of claims 1 to 7 or any one of claims 11 to 14 when dependent on any one of claims 1 to 7.

16. A head-end system of a content delivery network, the head-end system arranged to carry out a method according to any one of claims 8 to 10 or any one of claims 11 to 14 when dependent on any one of claims 8 to 10.

17. A receiver comprising the chip set according to claim 15.

18. A system comprising the head-end system according to claim 16 and one or more chip sets according to claim 15.

19. A computer program which, when executed, carries out a method according to any one of claims 1 to 14.

**Patentansprüche**

1.  Verfahren zum sicheren Erhalten eines Steuerworts in einem Chipsatz eines Empfängers, das Steuerwort zum Descramblen eines gescrambelten Inhalts, welcher von dem Empfänger empfangen wird, wobei das Verfahren bei dem Chipsatz umfasst:

    Empfangen einer gesicherten Version eines Chipsatz-Ladeschlüssels, welcher dem Chipsatz zugeordnet ist, wobei die gesicherte Version des Chipsatz-Ladeschlüssels gesichert wird, um die Authentizität und Vertraulichkeit des Chipsatz-Ladeschlüssels zu schützen, wobei die gesicherte Version des Chipsatz-Ladeschlüssels einen verschlüsselten Chipsatz-Ladeschlüssel und
    eine Signatur auf Grundlage des Chipsatz-Ladeschlüssels unter Verwendung eines privaten Signaturschlüssels umfasst, welcher einem Konditionalzugang-/Digitalrechte-Verwaltungssystem zugeordnet ist;
    Erhalten des Chipsatz-Ladeschlüssels von der gesicherten Version des Chipsatz-Ladeschlüssels, wobei das Erhalten des Chipsatz-Ladeschlüssels von der gesicherten Version des Chipsatz-Ladeschlüssels umfasst:

        a) Verifizieren der Signatur unter Verwendung eines öffentlichen Signatur-Verifizierungsschlüssels entsprechend dem privaten Signaturschlüssel, welcher dem Konditionalzugang-/Digitalrechte-Verwaltungssystem zugeordnet ist, wobei der Signatur-Verifizierungsschlüssel einer aus einer Mehrzahl von öffentlichen Signatur-Verifizierungsschlüsseln ist, und
        b) Entschlüsseln des verschlüsselten Chipsatz-Ladeschlüssels,

    wobei das Verfahren ferner umfasst:

        Empfangen einer gesicherten Version eines virtuellen Steuerworts, welches das virtuelle Steuerwort ist, welches unter Verwendung des Chipsatz-Ladeschlüssels aus einem Konditionalzugang-/Digitalrechte-Verwaltungsclient verschlüsselt worden ist, welcher kommunizierend mit dem Chipsatz verbunden ist;
Erhalten des virtuellen Steuerworts von der gesicherten Version des virtuellen Steuerworts durch Entschlüsseln der gesicherten Version des virtuellen Steuerworts unter Verwendung des Chipsatz-Ladeschlüssels;
Verwenden einer ersten kryptographischen Funktion zum Erzeugen einer gegebenen Ausgabe, wobei die gegebene Ausgabe wenigstens ein Steuerwort umfasst, aus einer Eingabe, welche das virtuelle Steuerwort und entweder die Mehrzahl von öffentlichen Signatur-Verifizierungsschlüsseln oder einen oder mehrere Werte umfasst, welche aus der Mehrzahl von öffentlichen Signatur-Verifizierungsschlüsseln abgeleitet sind, wobei jeder Signatur-Verifizierungsschlüssel einem Konditionalzugang-/Digitalrechte-Verwaltungssystem zugeordnet ist, wobei die erste kryptographische Funktion die Eigenschaft aufweist, dass es unmöglich ist, ein Schlüsselpaar, welches einen privaten Signaturschlüssel und einen öffentlichen Signatur-Verifizierungsschlüssel umfasst, und eine Eingabe für die erste kryptographische Funktion zu bestimmen, welche den bestimmten Signatur-Verifizierungsschlüssel oder einen oder mehrere Werte umfasst, welche wenigstens teilweise aus dem bestimmten Signatur-Verifizierungsschlüssel abgeleitet sind, so dass die erste kryptographische Funktion die gegebene Ausgabe aus der bestimmten Eingabe erzeugt;
Empfangen eines gescrambelten Inhalts, wobei der gescrambelte Inhalt ein Inhalt ist, welcher unter Verwendung des wenigstens einen Steuerworts gescrambelt worden ist; und
Descrambeln des empfangenen gescrambelten Inhalts unter Verwendung des wenigstens einen Steuerworts, welches unter Verwendung der ersten kryptographischen Funktion erzeugt worden ist.

2. Verfahren nach Anspruch 1, umfassend ein Empfangen und Speichern der Signatur-Verifizierungsschlüssel der Mehrzahl von Signatur-Verifizierungsschlüssel, wobei die erste kryptographische Funktion dazu eingerichtet ist, die gespeicherten Signatur-Verifizierungsschlüssel als einen Teil der Eingabe an die erste kryptographische Funktion zu verwenden.

3. Verfahren nach Anspruch 1, umfassend:

    Empfangen der Mehrzahl von Signatur-Verifizierungsschlüsseln;
    Erzeugen eines abgeleiteten Werts aus der empfangenen Mehrzahl von Signatur-Verifizierungsschlüsseln; und
    Speichern des erzeugten abgeleiteten Werts; wobei die erste kryptographische Funktion dazu eingerichtet ist, den gespeicherten abgeleiteten Wert als einen Teil der Eingabe an die erste kryptographische Funktion zu verwenden.

4. Verfahren nach einem der vorhergehenden Ansprüche, wobei der verschlüsselte Chipsatz-Ladeschlüssel der Chipsatz-Ladeschlüssel ist, welcher unter Verwendung eines öffentlichen Schlüssels verschlüsselt worden ist, welcher dem Chipsatz zugeordnet ist, wobei ein Entschlüsseln des verschlüsselten Chipsatz-Ladeschlüssels einen geheimen Schlüssel verwendet, welcher dem Chipsatz zugeordnet ist, wobei der geheime Schlüssel dem öffentlichen Schlüssel entspricht, welcher dem Chipsatz zugeordnet ist.

5. Verfahren nach Anspruch 4, umfassend ein Speichern des Chipsatz-Ladeschlüssels, welcher von der gesicherten Version des Chipsatz-Ladeschlüssels erhalten worden ist, durch den Chipsatz, so dass der gespeicherte Chipsatz-Ladeschlüssel verwendet werden kann, um gesicherte Versionen von virtuellen Steuerwörtern zu entschlüsseln, welche von dem Chipsatz erhalten werden.

6. Verfahren nach Anspruch 5, umfassend:

    Empfangen der Mehrzahl von Signatur-Verifizierungsschlüsseln zusammen mit der gesicherten Version des virtuellen Steuerworts; und
    Bestimmen, ob die Signatur auf Grundlage des gespeicherten Chipsatz-Ladeschlüssels unter Verwendung von einem der empfangenen Signatur-Verifizierungsschlüssel verifiziert worden ist, und wenn bestimmt wird, dass die Signatur auf Grundlage des gespeicherten Chipsatz-Ladeschlüssels nicht unter Verwendung von einem der empfangenen Signatur-Verifizierungsschlüssel verifiziert worden ist, nicht Verwenden des gespeicherten Chipsatz-Ladeschlüssels zum Entschlüsseln der gesicherten Version des virtuellen Steuerworts, welches von dem Chipsatz empfangen worden ist.

7. Verfahren nach einem der Ansprüche 4 bis 6, wobei der Empfänger ein Empfänger in einer Mehrzahl von Empfängern ist, wobei jeder Empfänger in der Mehrzahl von Empfängern einen entsprechenden Chipsatz aufweist, welcher einen zugeordneten geheimen Schlüssel aufweist, wobei die den Chipsätzen der Empfänger in der Mehrzahl von Empfängern zugeordneten geheimen Schlüssel voneinander verschieden sind.

8. Verfahren zum Bereitstellen eines Steuerworts für einen Chipsatz eines Empfängers, wobei der Chipsatz kommunizierend mit einem Konditionalzugang-/Digitalrechte-Verwaltungs-CA/DRM-Client verbunden ist, das Steuerwort zum Erlauben des Empfängers, einen gescrambelten Inhalt zu descrambeln, welcher zu dem Empfänger übertragen worden ist, wobei das Verfahren umfasst:

Übertragen zu dem CA/DRM-Client einer ersten gesicherten Version eines Chipsatz-Ladeschlüssels, welcher dem Chipsatz zugeordnet ist, wobei die erste gesicherte Version des Chipsatz-Ladeschlüssels den Chipsatz-Ladeschlüssel umfasst, welcher unter Verwendung des geheimen und authentifizierten Kanals geschützt ist, welcher von dem CA/DRM-System angeboten wird;

Übertragen an den Chipsatz einer zweiten gesicherten Version des Chipsatz-Ladeschlüssels, welcher dem Chipsatz zugeordnet ist, wobei die zweite gesicherte Version des Chipsatz-Ladeschlüssels gesichert ist, um die Authentizität und Vertraulichkeit des Chipsatz-Ladeschlüssels zu schützen, wobei die zweite gesicherte Version des Chipsatz-Ladeschlüssels des verschlüsselten Chipsatz-Ladeschlüssels und eine Signatur auf Grundlage des Chipsatz-Ladeschlüssels unter Verwendung eines privaten Signaturschlüssels umfasst, welcher dem CA/DRM-System zugeordnet ist und einem aus einer Mehrzahl von öffentlichen Signatur-Verifizierungsschlüsseln entspricht;

Erzeugen eines virtuellen Steuerworts an dem Headend-System des CA/DRM-Systems;

Erzeugen eines Steuerworts an dem Headend-System, wobei das Steuerwort als die Ausgabe einer ersten kryptographischen Funktion von einer Eingabe erhalten wird, welche das virtuelle Steuerwort und entweder die Mehrzahl von öffentlichen Signatur-Verifizierungsschlüsseln oder einen oder mehrere Werte umfasst, welche aus der Mehrzahl von öffentlichen Signatur-Verifizierungsschlüsseln abgeleitet worden sind, wobei jeder Signatur-Verifizierungsschlüssel einem CA/DRM-System zugeordnet ist, wobei die erste kryptographische Funktion die Eigenschaft aufweist, dass es unmöglich ist, ein Schlüsselpaar, welches einen privaten Signaturschlüssel und einen öffentlichen Signatur-Verifizierungsschlüssel umfasst, und eine Eingabe für die erste kryptographische Funktion zu bestimmen, welche den bestimmten Signatur-Verifizierungsschlüssel oder einen oder mehrere Werte umfasst, welche wenigstens teilweise aus dem bestimmten Signatur-Verifizierungsschlüssel abgeleitet sind, so dass die erste kryptographische Funktion die gegebene Ausgabe aus der bestimmten Eingabe erzeugt;

Übertragen des virtuellen Steuerworts von dem Headend-System zu dem CA/DRM-Client mittels des Empfängers als Teil der Konditionalzugangsdaten des CA/DRM-Systems;

Erzeugen bei dem CA/DRM-Client einer gesicherten Version des virtuellen Steuerworts, wobei die gesicherte Version des virtuellen Steuerworts das virtuelle Steuerwort ist, welches von dem CA/DRM-Client unter Verwendung des Chipsatz-Ladeschlüssels verschlüsselt worden ist;

Übertragen durch den CA/DRM-Client der gesicherten Version des virtuellen Steuerworts zu dem Chipsatz;

Scrambeln eines Inhalts bei dem Headend-System unter Verwendung des Steuerworts zum Erzeugen eines gescrambelten Inhalts; und

Übertragen des gescrambelten Inhalts zu dem Chipsatz.

9. Verfahren nach Anspruch 8, wobei der verschlüsselte Chipsatz-Ladeschlüssel der Chipsatz-Ladeschlüssel ist, welcher unter Verwendung eines öffentlichen Schlüssel verschlüsselt worden ist, welcher dem Chipsatz zugeordnet ist.

10. Verfahren nach Anspruch 8 oder 9, umfassend ein Übertragen des Steuerworts von dem Headend-System zu einem zweiten Konditionalzugang-/Digitalrechte-Verwaltungsclient mittels eines zweiten Empfängers, wobei der zweite Konditionalzugang-/Digitalrechte-Verwaltungsclient kommunizierend mit einem zweiten Chipsatz des zweiten Empfängers verbunden ist.

11. Verfahren nach einem der vorhergehenden Ansprüche, wobei wenigstens zwei der Signatur-Verifizierungsschlüssel in der Mehrzahl von Signatur-Verifizierungsschlüsseln demselben Konditionalzugang-/Digitalrechte-Verwaltungssystem zugeordnet sind.

12. Verfahren nach einem der vorhergehenden Ansprüche, wobei wenigstens zwei der Signatur-Verifizierungsschlüssel in der Mehrzahl von Signatur-Verifizierungsschlüsseln unterschiedlichen Konditionalzugang-/Digitalrechte-Verwaltungssystemen zugeordnet sind.

13. Verfahren nach einem der vorhergehenden Ansprüche, wobei ein abgeleiteter Wert erzeugt wird, indem die Mehrzahl von Signatur-Verifizierungsschlüsseln einer zweiten kryptographischen Funktion bereitgestellt werden, wobei die zweite kryptographische Funktion die Eigenschaft aufweist, dass es unmöglich ist, ein Schlüsselpaar, welches einen Signaturschlüssel und einen Signatur-Verifizierungsschlüssel umfasst, und eine Eingabe für die zweite kryptographische Funktion zu bestimmen, welche den erzeugten Signatur-Verifizierungsschlüssel umfasst, so dass die zweite kryptographische Funktion diesen abgeleiteten Wert aus der erzeugten Eingabe produziert.

14. Verfahren nach einem der vorhergehenden Ansprüche, wobei der eine oder die mehreren abgeleiteten Werte für jeden Signatur-Verifizierungsschlüssel in der Mehrzahl von Signatur-Verifizierungsschlüsseln einen entsprechenden Hash-Wert dieses Signatur-Verifizierungsschlüssels umfassen.

15. Chipsatz für einen Empfänger zum sicheren Erhalten eines Steuerworts, wobei der Chipsatz dazu eingerichtet ist, ein Verfahren entsprechend einem der Ansprüche 1 bis 7 oder einem der Ansprüche 11 bis 14, wenn abhängig von einem der Ansprüche 1 bis 7, durchzuführen.

16. Headend-System für ein Inhalt-Liefernetzwerk, wobei das Headend-System dazu eingerichtet ist, ein Verfahren nach einem der Ansprüche 8 bis 10 oder einem der Ansprüche 11 bis 14, wenn abhängig von einem der Ansprüche 8 bis 10, durchzuführen.

17. Empfänger, umfassend den Chipsatz nach Anspruch 15.

18. System, umfassend das Headend-System nach Anspruch 16 und einen oder mehrere Chipsätze nach Anspruch 15.

19. Computerprogramm, welches wenn es ausgeführt wird, ein Verfahren nach einem der Ansprüche 1 bis 14 durchführt.

## Revendications

1. Procédé d'obtention, en toute sécurité, d'un mot de commande dans un jeu de puces d'un récepteur, ledit mot de commande permettant de désembrouiller un contenu brouillé reçu par le récepteur, le procédé comprenant, au niveau du jeu de puces, comprenant les étapes consistant :

à recevoir une version sécurisée d'une clé de chargement de jeu de puces associée au jeu de puces, dans lequel la version sécurisée de la clé de chargement de jeu de puces est sécurisée pour protéger l'authenticité et la confidentialité de la clé de chargement de jeu de puces, dans lequel la version sécurisée de la clé de chargement de jeu de puces comprend une clé de chargement de jeu de puces cryptée, et une signature basée sur la clé de chargement de jeu de puces utilisant une clé de signature privée associée à un système de gestion d'accès conditionnels/droits numériques ;
à obtenir la clé de chargement de jeu de puces à partir de la version sécurisée de la clé de chargement de jeu de puces, dans lequel l'obtention de la clé de chargement de jeu de puces à partir de la version sécurisée de la clé de chargement de jeu de puces comprend :

a) la vérification de la signature en utilisant une clé de vérification de signature publique correspondant à la clé de signature privée associée au système de gestion d'accès conditionnels/droits numériques, dans lequel la clé de vérification de signature est l'une d'une pluralité de clés de vérification de signature publiques, et
b) le décryptage de la clé de chargement de jeu de puces cryptée,

le procédé comprenant en outre les étapes consistant :

à recevoir une version sécurisée d'un mot de commande virtuel qui est le mot de commande virtuel crypté en utilisant la clé de chargement de jeu de puces provenant d'un client de gestion d'accès conditionnels/droits numériques connecté en communication au jeu de puces ;
à obtenir le mot de commande virtuel à partir de la version sécurisée du mot de commande virtuel en décryptant la version sécurisée du mot de commande virtuel en utilisant la clé de chargement de jeu de puces ;
à utiliser une première fonction cryptographique pour produire une sortie donnée, la sortie donnée comprenant au moins un mot de commande, à partir d'une entrée qui comprend le mot de commande virtuel et la pluralité de clés de vérification de signature publiques ou une ou plusieurs valeur(s) dérivée(s) de la pluralité de clés de vérification de signature publiques, chaque clé de vérification de signature étant associée à un système de gestion d'accès conditionnels/droits numériques, dans lequel la première fonction cryptographique a la propriété qu'il est impossible de déterminer une paire de clés comportant une clé de signature privée et une clé de vérification de signature publique et une entrée pour la première fonction cryptographique comprenant la clé de vérification de signature déterminée ou une ou plusieurs valeur(s) dérivée(s), au moins en partie, de la clé de vérification de signature déterminée, de sorte que la première fonction cryptographique produise la sortie donnée à partir de l'entrée déterminée ;

à recevoir un contenu brouillé, le contenu brouillé étant un contenu qui a été brouillé en utilisant l'au moins un mot de commande ; et à désembrouiller le contenu brouillé reçu en utilisant l'au moins un mot de commande produit en utilisant la première fonction cryptographique.

2. Procédé selon la revendication 1, comprenant la réception et le stockage des clés de vérification de signature de la pluralité de clés de vérification de signature, dans lequel ladite première fonction cryptographique est conçue pour utiliser lesdites clés de vérification de signature stockées en tant que partie de l'entrée de la première fonction cryptographique.

3. Procédé selon la revendication 1, comprenant les étapes consistant :

à recevoir la pluralité de clés de vérification de signature ;
à générer une valeur dérivée de la pluralité reçue de clés de vérification de signature ; et
à stocker la valeur dérivée générée ;
dans lequel ladite première fonction cryptographique est conçue pour utiliser ladite valeur dérivée stockée en tant que partie de l'entrée de la première fonction cryptographique.

4. Procédé selon l'une quelconque des revendications précédentes, dans lequel la clé de chargement de jeu de puces cryptée est la clé de chargement de jeu de puces cryptée en utilisant une clé publique associée au jeu de puces, dans lequel le décryptage de la clé de chargement de jeu de puces cryptée utilise une clé secrète associée au jeu de puces, la clé secrète correspondant à la clé publique associée au jeu de puces.

5. Procédé selon la revendication 4, comprenant le jeu de puces stockant la clé de chargement de jeu de puces obtenue à partir de la version sécurisée de la clé de chargement de jeu de puces, de sorte que la clé de chargement de jeu de puces stockée puisse être utilisée pour décrypter des versions sécurisées de mots de commande virtuels reçus par le jeu de puces.

6. Procédé selon la revendication 5, comprenant les étapes consistant :

à recevoir la pluralité de clés de vérification de signature ensemble avec la version sécurisée du mot de commande virtuel ; et
à déterminer si la signature basée sur la clé de chargement de jeu de puces stockée a été vérifiée en utilisant l'une des clés de vérification de signature reçues et, s'il est déterminé que la signature basée sur la clé de chargement de jeu de puces stockée n'a pas été vérifiée en utilisant l'une des clés de vérification de signature reçues, sans utiliser la clé de chargement de jeu de puces stockée pour décrypter la version sécurisée du mot de commande virtuel reçu par le jeu de puces.

7. Procédé selon l'une quelconque des revendications 4 à 6, dans lequel le récepteur est un récepteur dans une pluralité de récepteurs, chaque récepteur dans la pluralité de récepteurs ayant un jeu de puces correspondant qui a une clé secrète associée, dans lequel les clés secrètes associées aux jeux de puces des récepteurs dans la pluralité de récepteurs sont différentes les unes des autres.

8. Procédé de fourniture d'un mot de commande à un jeu de puces d'un récepteur, le jeu de puces étant connecté en communication à un client de gestion d'accès conditionnels/droits numériques CA/DRM, le mot de commande permettant au récepteur de désembrouiller un contenu brouillé transmis au récepteur, le procédé comprenant les étapes consistant :

à transmettre au client CA/DRM une première version sécurisée d'une clé de chargement de jeu de puces associée au jeu de puces, dans lequel la première version sécurisée de la clé de chargement de jeu de puces comprend la clé de chargement de jeu de puces protégée en utilisant le canal confidentiel et authentifié offert par le système CA/DRM ;
à transmettre au jeu de puces une deuxième version sécurisée de la clé de chargement de jeu de puces associée au jeu de puces, dans lequel la deuxième version sécurisée de la clé de chargement de jeu de puces est sécurisée afin de protéger l'authenticité et la confidentialité de la clé de chargement de jeu de puces, dans lequel la deuxième version sécurisée de la clé de chargement de jeu de puces comprend la clé de chargement de jeu de puces cryptée et une signature basée sur la clé de chargement de jeu de puces utilisant une clé de signature privée associée au système CA/DRM et correspondant à l'une d'une pluralité de clés de vérification de signature publiques ;
à générer un mot de commande virtuel au niveau d'un système de tête de réseau du système CA/DRM ;
à générer un mot de commande au niveau du système de tête de réseau, le mot de commande étant obtenu comme étant la sortie d'une première fonction cryptographique à partir d'une entrée qui comprend le mot de commande virtuel et la pluralité de clés de vérification de signature publiques ou une ou plusieurs valeur(s) dérivée(s) de la pluralité de clés de vérification de signature publiques, chaque clé de vérification de signature étant associée à un système CA/DRM, dans lequel la première fonction cryptographique a la propriété qu'il est impossible de déterminer une paire de clés comportant une clé de signature privée et une clé de vérification de signature publique et une entrée pour la première fonction cryptographique comprenant la clé de vérification de signature déterminée ou une ou plusieurs valeur(s) dérivée(s), au moins en partie, de la clé de vérification de signature déterminée, de sorte que la première fonction cryptographique produise la sortie donnée pour l'entrée déterminée ;

à transmettre le mot de commande virtuel du système de tête de réseau au client CA/DRM via le récepteur en tant que partie des données d'accès conditionnels du système CA/DRM ;

à générer au niveau du client CA/DRM une version sécurisée du mot de commande virtuel, dans lequel la version sécurisée du mot de commande virtuel est le mot de commande virtuel crypté par le client CA/DRM en utilisant la clé de chargement de jeu de puces ;

à transmettre par le client CA/DRM la version sécurisée du mot de commande virtuel au jeu de puces ;

à brouiller le contenu au niveau du système de tête de réseau en utilisant le mot de commande pour produire un contenu brouillé ; et

à transmettre le contenu brouillé au jeu de puces.

9. Procédé selon la revendication 8, dans lequel la clé de chargement de jeu de puces cryptée est la clé de chargement de jeu de puces cryptée en utilisant une clé publique associée au jeu de puces.

10. Procédé selon la revendication 8 ou 9, comprenant la transmission du mot de commande du système de tête de réseau à un deuxième client de gestion d'accès conditionnels/droits numériques via un deuxième récepteur, dans lequel le deuxième client de gestion d'accès conditionnels/droits numériques est connecté en communication à un deuxième jeu de puces du deuxième récepteur.

11. Procédé selon l'une quelconque des revendications précédentes, dans lequel au moins deux des clés de vérification de signature dans la pluralité de clés de vérification de signature sont associées au même système de gestion d'accès conditionnels/droits numériques.

12. Procédé selon l'une quelconque des revendications précédentes, dans lequel au moins deux des clés de vérification de signature dans la pluralité de clés de vérification de signature sont associées à différents systèmes de gestion d'accès conditionnels/droits numériques.

13. Procédé selon l'une quelconque des revendications précédentes, dans lequel une valeur dérivée est produite en fournissant la pluralité de clés de vérification de signature à une deuxième fonction cryptographique, dans lequel la deuxième fonction cryptographique a la propriété qu'il est impossible de générer une paire de clés comportant une clé de signature et une clé de vérification de signature et une entrée pour la deuxième fonction cryptographique comprenant la clé de vérification de signature générée de sorte que la deuxième fonction cryptographique produise cette valeur dérivée de l'entrée générée.

14. Procédé selon l'une quelconque des revendications précédentes, dans lequel la ou les plusieurs valeur(s) dérivée(s) comprend/comprennent, pour chaque clé de vérification de signature dans la pluralité de clés de vérification de signature, une valeur de hachage cryptographique correspondante de cette clé de vérification de signature.

15. Jeu de puces, destiné à un récepteur, permettant d'obtenir, en toute sécurité, un mot de commande, le jeu de puces étant conçu pour mettre en œuvre un procédé selon l'une quelconque des revendications 1 à 7 ou l'une des revendications 11 à 14, lorsqu'elles dépendent de l'une quelconque des revendications 1 à 7.

16. Système de tête de réseau d'un réseau de distribution de contenu, le système de tête de réseau étant conçu pour mettre en œuvre un procédé selon l'une quelconque des revendications 8 à 10 ou l'une quelconque des revendications 11 à 14 lorsqu'elles dépendent de l'une des revendications 8 à 10.

17. Récepteur comprenant le jeu de puces selon la revendication 15.

18. Système comprenant le système de tête de réseau selon la revendication 16 et un ou plusieurs jeu(x) de puces selon la revendication 15.

19. Programme informatique qui, lorsqu'il est exécuté, met en œuvre un procédé selon l'une quelconque des revendications 1 à 14.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03028287 A
- EP 0801478 A
- WO 2006045014 A

**Non-patent literature cited in the description**

- **B SCHNEIER.** Handbook of Applied Cryptography. 30-46